# EUROPEAN PATENT APPLICATION

(11) **EP 3 666 846 A1**
(43) Date of publication of application: **17.06.2020**
(21) Application number: 18820038.0
(22) Date of filing: 19.06.2018
(51) Int. Cl.: C09J 201/00, B32B 17/10, B32B 27/00, B32B 27/18, C09J 7/38, C09J 11/04, C09J 11/06

(54) **ADHESIVE LAYER, NEAR-INFRARED ABSORPTION FILM, LAMINATED STRUCTURE, LAMINATE, ADHESIVE COMPOSITION, AND METHOD FOR PRODUCING SAME**

(30) Priority: 19.06.2017 WO PCT/JP2017/022469
(71) Applicant: Sumitomo Metal Mining Co., Ltd., Tokyo 105-8716 (JP)
(72) Inventor: OKADA, Mika, Isa-shi Kagoshima 895-2501 (JP); CHONAN, Takeshi, Isa-shi Kagoshima 895-2501 (JP); TSUNEMATSU, Hirofumi, Isa-shi Kagoshima 895-2501 (JP)
(74) Representative: TBK
(86) International application number: PCT/JP2018/023351
(87) International publication number: WO 2018/235833

(57) **Abstract**

There is provided an adhesive layer that transmits a light in a visible light region and has absorption in a near-infrared region, having a low haze and excellent productivity, including: composite tungsten oxide particles; a dispersing agent; a metal coupling agent having an amino group; an adhesive; and a cross-linking agent, wherein the composite tungsten oxide particles have a XRD peak top intensity ratio value of 0.13 or more based on XRD peak intensity ratio value of 1 on (220) plane of a silicon powder standard sample (640c produced by NIST).

## Description

### TECHNICAL FIELD

The present invention relates to an adhesive layer, a near-infrared absorption film, a laminated structure, a laminated body, an adhesive composition and a method for producing the same.

### DESCRIPTION OF RELATED ART

Near-infrared absorption films having near-infrared absorption functions for shielding a part of injected solar energy and reducing a cooling load, the heat sensation to a human, bad influences on plants and the like have been sought for purposes such as a window material for automobiles, buildings or the like, films of plastic houses or the like. Further, the use of a near-infrared absorption film as an infrared absorption filter has also been considered for display panels or camera modules as well.

Adhering a near-infrared absorption film (transparent film with an adhesive layer) to a window has been suggested as a method of applying a near-infrared absorption function to a previously provided window.

As an example of the near-infrared absorption film, Patent Document 1 discloses a heat-ray absorption film having a heat-ray absorbent layer, an adhesive layer and a hard coat layer, wherein the front surface consists of the hard coat layer, and the back surface consists of the adhesive layer. Patent Document 1 also discloses that the hard coat layer also functions as a heat-ray absorbent layer, the heat-ray absorbent layer comprises heat-ray absorbent inorganic fine particles, and antimony containing tin oxide fine particles (ATO) or indium containing tin oxide fine particles (ITO) are used as the heat-ray absorbent inorganic fine particles. However, the heat ray absorption film disclosed in Patent Document 1 uses ATO, ITO and the like as the heat-ray absorbent inorganic fine particles, and the near-infrared absorption properties were insufficient according to an examination by the inventors of the present invention.

Further, Patent Document 2 discloses an antireflection film obtained by laminating (A) a hard coat layer comprising an active energy ray curing resin and a near infrared ray absorbent and having a thickness of 2 to 20 µm, and a (B) a low refractive index layer comprising an active energy ray curing resin and having a refractive index of 1.43 and a thickness of 50 to 200 nm in order on one surface of a substrate film. It is also disclosed that an adhesive layer can be formed on an opposite side of the hard coat layer of the substrate film in the antireflection film disclosed in Patent Document 2.

However, in Patent Document 2, a coated layer comprising the near infrared ray absorbent is formed on a substrate. Thus, the antireflection film to be obtained is configured so that the near infrared ray absorbent is exposed to the air. Moreover, if a tungsten oxide-based compound used as the near infrared ray absorbent is exposed to the air for a long period of time, there was the problem that the near-infrared absorption properties decreased by discoloration due to oxidation.

Patent Document 3 also discloses a transparent resin composition comprising a cross-linking compound, an additive having a high amine value and inorganic particles. Moreover, Patent Document 3 discloses that the inorganic particles comprise one or more composite metal oxides selected from the group of antimony doped tin oxide, tin doped indium oxide, cesium doped tungsten oxide, aluminum doped zinc oxide, gallium doped zinc oxide and niobium doped titanium oxide. Furthermore, Patent Document 3 also discloses a heat ray absorption film obtained using the transparent resin composition to form a coated layer on a substrate.

Patent Document 4 discloses a transparent resin composition comprising a cross-linking compound and inorganic particles, wherein the inorganic particles includes one or more composite metal oxides selected from the group of antimony doped tin oxide, tin doped indium oxide, cesium doped tungsten oxide, aluminum doped zinc oxide, gallium doped zinc oxide and niobium doped titanium oxide, and a surface of the inorganic particles is modified by an organic compound having an organic group including one of or both of an acryloyl group and a methacryloyl group. Furthermore, Patent Document 4 also discloses a heat ray absorption film which forms a coated layer using the transparent resin composition on a substrate.

In Patent Documents 3 and 4, antimony doped tin oxide, tin doped indium oxide, cesium doped tungsten oxide, aluminum doped zinc oxide, gallium doped zinc oxide and niobium doped titanium oxide are exemplified as the inorganic particles. However, only the example which used ATO or ITO is disclosed. Therefore, the near-infrared absorption properties of the heat ray absorption film specifically disclosed in a case similar to Patent Document 1 were not sufficient.

Further, in the heat ray absorption films disclosed in Patent Documents 3 and 4, the coated layers using the transparent resin composition comprised of the above-described inorganic particles are formed on the substrate, thus, there was the problem that the inorganic particles were exposed to air in the same manner as in Patent Document 2.

Furthermore, Patent Document 5 discloses an adhesive composition comprised of a tungsten oxide-based compound having a predetermined average particle size, metal oxide fine particles and resin, and Patent Document 5 also discloses an infrared absorption filter having an adhesive layer consisting of an adhesive composition formed on a substrate.

Patent Document 6 discloses a dispersing liquid for forming an infrared absorbing adhesive film in which infrared absorbing material fine particles constituted by one or more types of oxide fine particles selected from tungsten oxide fine particles and composite tungsten oxide fine particle are dispersed in a solvent, and a phosphorus-based antioxidant is also included in the solvent with the infrared absorbing material fine particles. Further, Patent Document 6 also discloses that a (meth)acrylic-based polymer and a cross-linking agent are added in the dispersing liquid for forming an infrared absorbing adhesive film. Furthermore, Patent Document 6 also discloses an infrared absorbing adhesive film obtained by forming a coated layer by coating a coating solution for forming an infrared absorbing adhesive film on a surface of a first substrate of a multilayered filter for a plasma display panel, and subjecting the coated layer to an aging process, and an infrared absorbing optical member constituted by a first substrate and an infrared absorbing adhesive film formed on a surface of the first substrate.

In Patent Document 5 and Patent Document 6, since the adhesive layers comprised of a tungsten oxide-based compound and composite tungsten oxide fine particle, these materials are suppressed from being exposed to the air, thus, the discoloration due to oxidation does not easily occur.

However, according to the investigation by the present inventors, it was found that the adhesive composition prepared by the methods disclosed in Patent Document 5 and Patent Document 6, may become cloudy or gel within a few hours after preparation.

If the stability of such an adhesive agent composition is not good, it is necessary to use the adhesive agent composition immediately after being produced, thus, there is a problem in productivity. Further, when the adhesive layer is formed using such an adhesive agent composition, there is a problem that the haze of the adhesive layer becomes high. Furthermore, the adhesive composition in which opaqueness or gelation were generated must be discarded, thus, there is also a problem in cost.

### Citation List

### Patent Documents

Patent Document 1: Japanese Patent Application Publication No. 8-281860
Patent Document 2: Japanese Patent Application Publication No. 2008-26492
Patent Document 3: Japanese Patent Application Publication No. 2015-105325
Patent Document 4: Japanese Patent Application Publication No. 2015-105328
Patent Document 5: Japanese Patent No. 5338099
Patent Document 6: Japanese Patent No. 5692499

### Summary of the Invention

### Problem to be solved by the Invention

The present invention has been made in view of the above problems of the prior art, and has the object of providing an adhesive composition that transmits the visible light region and has absorption in the near-infrared region, having a low haze and excellent productivity, and a method for producing the same.

### Means for solving the Problem

In order to solve the above-described problems, and as a result of intensive studies, the present inventors discovered an adhesive layer comprising in an X-ray diffraction (hereinafter, may be referred to as "XRD" in the present invention) pattern of the composite tungsten oxide particles, composite tungsten oxide particles with a relative value of the peak top intensity being a predetermined value, a dispersing agent, a metal coupling agent having an amino group, an adhesive and a cross-linking agent. Specifically, the adhesive layer containing the composite tungsten oxide particles having XRD peak top intensity ratio value of 0.13 or more based on XRD peak intensity ratio value of 1 on (220) plane of a silicon powder standard sample (640c produced by NIST), transmits light in the visible light region and absorbs in the near-infrared region and exhibits sufficient contrast.

Namely, in order to achieve the above-described object, a first invention is an adhesive layer including:
composite tungsten oxide particles;
a dispersing agent;
a metal coupling agent having an amino group;
an adhesive; and
a cross-linking agent,
wherein the composite tungsten oxide particles have a XRD peak top intensity ratio value of 0.13 or more based on XRD peak intensity ratio value of 1 on (220) plane of a silicon powder standard sample (640c produced by NIST).

A second invention is the adhesive layer according to the first invention, wherein the composite tungsten oxide particles are particles of a composite tungsten oxide represented by a general formula MxWyOz (wherein, M is one or more elements selected from Cs, Rb, K, Tl, In, Ba, Li, Ca, Sr, Fe, Sn, Al, Cu and Na, and satisfying 0.001 ≤ x/y ≤ 1, and 2.2 ≤ z/y ≤ 3.0).

A third invention is the adhesive layer according to the first or the second invention, wherein the composite tungsten oxide particles include a composite tungsten oxide having a hexagonal crystal structure.

A fourth invention is the adhesive layer according to any one of the first to the third inventions, wherein a crystallite size of the composite tungsten oxide ultrafine particles is 1 nm or more.

A fifth invention is the adhesive layer according to any one of the first to the fourth inventions, wherein an average particle size of the composite tungsten oxide particles is 1 nm or more and 100 nm or less.

A sixth invention is the adhesive layer according to any one of the first to the fifth inventions, wherein the metal coupling agent having an amino group is a silane coupling agent having an amino group.

A seventh invention is the adhesive layer according to any one of the first to the sixth inventions, wherein the metal coupling agent having an amino group is a titanate coupling agent having an amino group.

An eighth invention is the adhesive layer according to any one of claims 1 to 7, containing the metal coupling agent having an amino group in a proportion of 1 part by mass or more and 100 parts by mass or less, based on 100 parts by mass of the composite tungsten oxide particles.

A ninth invention is the adhesive layer according to any one of the first to the eighth inventions, wherein
the adhesive contains an acrylic-based polymer.

A tenth invention is the adhesive layer according to any one of the first to the ninth inventions, wherein
the dispersing agent is a high molecular dispersing agent.

An eleventh invention is the adhesive layer according to any one of the first to the tenth inventions further including one or more selected from an ultraviolet absorbing agent, a HALS, and an antioxidant.

A twelfth invention is a near-infrared absorption film including the adhesive layer according to any one of the first to the eleventh inventions.

A thirteenth invention is a near-infrared absorption film including:
a transparent film having one surface and the other surface arranged on an opposite side of the one surface;
the adhesive layer according to any one of the first inventions 1 to 11 arranged on the one surface side of the transparent film, and
a hard coat layer arranged on the other surface side of the transparent film.

A fourteenth invention is a laminated structure having
a plurality of transparent films, and
the adhesive layer according to any one of the first to the eleventh inventions, wherein
a plurality of the transparent films and the adhesive layer are arranged to be parallel to each other, and
the adhesive layer is arranged between a plurality of the transparent films.

A fifteenth invention is a laminated body including:
the adhesive layer according to any one of claims 1 to 11,
a glass plate arranged on one surface side of the adhesive layer, and
a transparent film having a hard coat layer arranged on an opposite side of the one surface of the adhesive layer.

A sixteenth invention is an adhesive composition including:
composite tungsten oxide particles;
a dispersing agent;
a metal coupling agent having an amino group;
an adhesive; and
a cross-linking agent,
wherein the composite tungsten oxide particles have a XRD peak top intensity ratio value of 0.13 or more based on XRD peak intensity ratio value of 1 on (220) plane of a silicon powder standard sample (640c produced by NIST).

A seventeenth invention is the adhesive composition according to the sixteenth invention further including one or more selected from an ultraviolet absorbing agent, a HALS and an antioxidant.

An eighteenth invention is a method for producing the adhesive composition including: composite tungsten oxide particles; a dispersing agent; a metal coupling agent having an amino group; an adhesive; a cross-linking agent ; and a solvent,
the method including:
producing by firing the composite tungsten oxide particles so that a XRD peak top intensity ratio value is 0.13 or more based on XRD peak intensity ratio value of 1 on (220) plane of a silicon powder standard sample (640c produced by NIST);
adding the produced composite tungsten oxide particles, the dispersing agent, the metal coupling agent having an amino group, the adhesive and the cross-linking agent, to the solvent, and
dispersing the composite tungsten oxide particles into the solvent, while maintaining the XRD peak top intensity ratio value to 0.13 or more.

### Advantage of the Invention

According to the present invention, it is possible to provide an adhesive layer having an absorption capability of light at a near-infrared region, having a low haze and excellent productivity.

### BRIEF DESCRIPTION OF DRAWINGS

Fig. 1 is a conceptual diagram of a high-frequency plasma reaction device used in the present invention.
Fig. 2 is an X-ray diffraction pattern of the fine particles prior to pulverization in Example 1.
Fig. 3 is an explanatory drawing of a laminated structure according to the present invention.
Fig. 4 is an explanatory drawing of a laminated body according to the present invention.

### Detailed Description of the Invention

[1] Adhesive composition and an adhesive layer produced from the adhesive composition, [2] a near-infrared absorption film, [3] a laminated structure, and [4] a laminate body, will be described below in order regarding the embodiments for carrying out the present invention, however, the present invention is not limited to the following embodiments, and various modifications and substitutions can be made to the following embodiments without departing from the scope of the present invention.

[1] Adhesive composition and an adhesive layer produced from the adhesive composition

First, an adhesive layer produced from an adhesive composition and the adhesive composition according to the present invention will be described in the order of (A) the adhesive composition and (B) the adhesive layer.

### (A) Adhesive composition

The adhesive composition according to the present invention is a composition for obtaining the adhesive layer which is described later, and composite tungsten oxide particles, a dispersing agent, a metal coupling agent having an amino group, an adhesive, a cross-linking agent and other additive components as desired may be included in a predetermined solvent.

The inventors of the present invention performed keen investigations with regards to an adhesive layer having light absorbing capability in the near-infrared region, low haze and excellent productivity. Further, the inventors of the present invention performed keen investigations with regards to a method which improves the opaqueness and gelation of the adhesive composition which is the raw material of the adhesive layer, and stably maintains the adhesive composition.

As a result, it was found that by the adhesive layer and the adhesive composition containing the composite tungsten oxide particles and the metal coupling agent having an amino group, the adhesive layer could have a light absorbing capability in the near-infrared region and the haze could be suppressed. Furthermore, it was found that the adhesive composition could be stably maintained without opaqueness or gelation, and the productivity of the adhesive layer could be increased.

While the reasons for the above-described results are unclear, by adding the metal coupling agent having an amino group to the adhesive layer and the adhesive composition, the surface of the composite tungsten oxide particles can be modified by the metal coupling agent having an amino group. As a result, the compatibility between the composite tungsten oxide particles and the adhesive improves. By improving the compatibility between the composite tungsten oxide particles and the adhesive, the composite tungsten oxide particles can be uniformly dispersed within the adhesive layer and within the adhesive composition. Furthermore, the haze of the adhesive layer can be decreased, the adhesive composition can be stably maintained, and the productivity of the adhesive layer can be increased.

The inventors of the present invention presume that the above are the principles of the suppression of haze of the adhesive layer and the improvement of the stability of the adhesive composition by adding the metal coupling agent having an amino group.

The adhesive composition according to the present invention will be described below in the order of (1) the composite tungsten oxide particles, (2) the metal coupling agent having an amino group, (3) the adhesive, (4) the dispersing agent, the cross-linking agent and other additive components, (5) the solvent and (6) the production of the adhesive composition.

### (1) Composite tungsten oxide particles

The composite tungsten oxide particles will be described in the order of (a) the XRD peak top intensity ratio, (b) the constituent element ratio, (c) the crystal structure, (d) the method for synthesizing the composite tungsten oxide particles and (e) the summary.

### (a) XRD peak top intensity ratio

In the present invention, it is known that the near infrared absorption fine particles used in the adhesive layer are the composite tungsten oxide particles having a relative value of the peak top intensity which is a predetermined value in the XRD pattern of the composite tungsten oxide particles. Specifically, when the XRD peak intensity according to the (220) plane of the standard silicon powder sample (640c, produced by NIST) under the same measurement conditions as the composite tungsten oxide particles which are the object to be measured was set to 1, the XRD peak top intensity ratio of the composite tungsten oxide particles of 0.13 or more.

Furthermore, the crystallite size of the composite tungsten oxide particles in the adhesive layer according to be the present invention described later are preferably 1 nm or more and 100 nm or less.

The XRD peak top intensity of the above-described composite tungsten oxide particles is closely related to the crystallinity of the fine particles, and in turn, is closely related to the free electron density of the fine particles, and greatly influences the near-infrared absorption properties of the fine particles. Moreover, if the XRD peak top intensity of the composite tungsten oxide particles is 0.13 or more, the desired near-infrared absorption properties can be obtained. The desired near-infrared absorption properties refers to when the transmittance of light having a wavelength of 550 nm which is the visible light region is adjusted in the range of 70%, to the transmittance of light having a wavelength of 1000 nm which is the near-infrared region set in a range of 1/7 or less of the transmittance of light in the visible light region. When the near-infrared absorption properties are exhibited, the contrast between visible light and near-infrared light becomes clear.

When the XRD peak top intensity ratio value of the composite tungsten oxide particles is 0.13 or more, the free electron density is secured in the fine particle, and the above-described near-infrared absorption properties are exhibited. On the other hand, it is preferable that the relative value of the peak top intensity is 0.7 or less.

However, the XRD peak top intensity is the peak intensity at 2θ where the peak count is the highest in the -ray diffraction pattern. Moreover, in hexagonal Cs composite tungsten oxide and Rb composite tungsten oxide, the peak count 2θ in the X-ray diffraction pattern appears in a range of 23° to 31°.

The XRD peak top intensity of the composite tungsten oxide particles will be explained from a different viewpoint.

The fact that the XRD peak top intensity ratio value of the composite tungsten oxide particles is 0.13 or more illustrates that the composite tungsten oxide particles having a crystallinity containing almost no hetero phase have been obtained. That is, it is considered that the obtained composite tungsten oxide particles are not substantially amorphized. As a result, it is considered that the near-infrared absorption properties can be sufficiently obtained by dispersing the composite tungsten oxide particles containing almost no hetero phase in a liquid medium which transmits visible light.

However, in the present invention, the term "hetero phase" refers to a phase of a compound other than the composite tungsten oxide.

A powder X-ray diffraction method is used for the measurement of the XRD peak top intensity of the above-described composite tungsten oxide particles. At this time, in order to have an objective quantitative property in the comparison between samples, it is necessary that a standard sample is measured under the same conditions, and the comparison between samples is performed using the XRD peak top intensity ratio of the fine particles based on the peak intensity of the standard sample. Using a universal standard silicon powder sample (640c, produced by NIST) as the standard sample is desirable. Furthermore, it is desirable that the other measurement conditions are always constant in order to have the quantitative property, and a sample holder having a depth of 1.0 mm is filled with a fine particle sample by a known operation during the X-ray diffraction measurement. Specifically, in order to avoid a preferential orientation (crystal orientation) from occurring in the fine particle, it is preferable to fill the sample holder is randomly and gradually filled and the sample holder is filled as densely as possible without unevenness.

As an X-ray source, an X-ray tube having Cu as an anode target material is used at an output setting of 45 kV/40 mA, and the measurement is performed by a powder X-ray diffraction method of θ-2θ in a step scan mode (step size: 0.0165° (2θ) and counting time: 0.022 msec/step).

At this time, the XRD peak intensity is varied according to the use time of the X-ray tube, and therefore it is preferable that the use time of the X-ray tube is almost the same among samples. In order to ensure objective quantitative properties, it is necessary that the difference between the samples during the use time of the X-ray tube be at most 1/20 or less of a predicted lifetime of the X-ray tube. As a more preferable measurement method, there is a method for calculating the XRD peak intensity ratio by measuring the standard silicon powder sample every time the X-ray diffraction pattern of the composite tungsten oxide fine particles is measured. This measurement method was used in the present invention. The predicted lifetime of an X-ray tube of a commercially available X-ray device is usually several thousand hours or more and the measurement time per sample is several hours or less, thus, the influence on the XRD peak top intensity ratio due to the use time of the X-ray tube can be made negligibly small by performing the above-described preferable measurement method.

Further, in order to keep the temperature of the X-ray tube constant, a cooling water temperature for the X-ray tube is preferably kept constant.

However, the XRD pattern of the disintegrated, pulverized or dispersed composite tungsten oxide fine particles which are described later contained in the adhesive layer after are also maintained in the XRD pattern of the composite tungsten oxide particles contained in the adhesive layer according to the present invention. However, the crystal structure and the crystallite size can be obtained by analyzing the XRD pattern obtained when measuring the XRD peak top intensity.

Further, the average particle size of the composite tungsten oxide particles contained in the adhesive layer according to the present invention is preferably 1 nm or more and 100 nm or less. This is because, if the composite tungsten oxide particles are of such an average particle size, the composite tungsten oxide particles absorb the near-infrared light, the transparency of the visible light region can be ensured, and the visibility can be ensured.

When the adhesive layer according to the present invention is used in applications in which the transparency of a visible region is particularly important such as the roof or side window of an automobile, the average particle size of the composite tungsten oxide particles is more preferably 40 nm or less, further preferably 30 nm or less, and even more preferably 25 nm or less.

On the other hand, if the average particle size of the composite tungsten oxide particles is 1 nm or more, industrial production is easy which is preferable.

### (b) Constituent element ratio

The composite tungsten oxide which is a preferable embodiment of the near infrared absorption fine particles according to the present invention and is expressed by MxWyOz (wherein, M is one or more elements selected from H, He, alkali metal, alkaline earth metal, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, I, and Yb, W is tungsten, O is oxygen, and satisfying 0.001 ≤ x/y ≤ 1, and 2.2 ≤ z/y ≤ 3.0) is a material having a dark color. Moreover, in an ultrafine fine particle state, the composite tungsten oxide has a transmittance peak in the visible light region (wavelengths 380 to 780 nm), and exhibits a transmission characteristic having a transmittance bottom in the near-infrared region (wavelengths 800 to 2400 nm).

Further, Cs, Rb, K, Tl, Ba, Cu, Al, Mn and In are preferable as the M element, and Cs and Rb are particularly preferable because the composite tungsten oxide is likely to have a hexagonal crystal structure and the contrast between visible light and near infrared light becomes clear.

Here, the value of x/y which indicates an addition amount of the M element will be described. When the value of x/y is 0.001 or more, a sufficient number of free electrons is generated and the desired near-infrared absorption property can be obtained. Moreover, the more the addition amount of the M element increases, the more the feed amount of the free electrons increases and more the near-infrared absorption property also increases, but when the value of x/y is about 1, the effect is saturated. Further, when the value of x/y is 1 or less, an impurity phase can be preferably prevented from being generated in the composite tungsten fine particles.

Next, the value of z indicating control of oxygen content will be described.

In the composite tungsten oxide fine particle expressed by the general formula MxWyOz, the value of z/y is preferably 2.2 < z/y ≤ 3.0, more preferably 2.6 ≤ z/y ≤ 3.0, and most preferably 2.7 ≤ z/y ≤ 3.0. This is because when the value of z/y is 2.2 or more, it is possible to avoid the appearance of a crystal phase of WO₂ which is a compound which is not desired in the composite tungsten oxide, and chemical stability as a material can be obtained, and therefore it is possible to apply the tungsten oxide fine particle as an effective infrared absorption material. On the other hand, when the value of z/y is 3.0 or less, the required number of free electrons required in the tungsten oxide is generated and can be used as an efficient infrared absorption material.

### (c) Crystal Structure

When the composite tungsten oxide particles having a hexagonal crystal structure have a uniform crystal structure, the addition amount of the addition element M is preferably 0.2 or more and 0.5 or less, and more preferably 0.29 ≤ x/y ≤ 0.39 in terms of x/y. Theoretically it is considered that when z/y = 3, the value of x/y becomes 0.33, thus, the addition element M becomes arranged in all hexagonal voids.

Moreover, even when the composite tungsten oxide particles form a tetragonal or a cubic tungsten bronze structure other than the above-described hexagonal crystal structure, the composite tungsten oxide particles are effective as an infrared absorption material. An absorption position in the near-infrared region tends to change depending on the crystal structure adopted by the composite tungsten oxide particles, and the absorption position in the near-infrared region is shifted to a longer wavelength side in the case of the tetragonal crystal structure relative to the case of the cubic crystal structure, and the absorption position tends to shift to a longer wavelength side in the case of the hexagonal crystal structure relative to the case of the tetragonal crystal structure. Further, accompanying the fluctuation of the absorption position, the absorption in the visible light region is smallest in the order of the hexagonal crystal structure, the tetragonal crystal structure, and the cubic crystal structure which has the largest absorption among these crystal structures. Therefore, it is most preferable that a hexagonal tungsten bronze is used in applications in which more light in the visible light region is transmitted and more light in the near-infrared region is absorbed. When the composite tungsten oxide particles have a hexagonal crystal structure, the transmittance of the fine particles in the visible light region improves, and the absorption in the near-infrared region improves.

As described above, in the composite tungsten oxide, when the XRD peak top intensity ratio value satisfies the above-described predetermined value, and if the hexagonal tungsten bronze is used, excellent optical properties are exhibited. Furthermore, even when the composite tungsten oxide particles have an orthorhombic crystal structure or a monoclinic crystal structure similar to WO_{2.72} called the Magneli phase, the composite tungsten oxide particles are excellent in infrared absorption, and are effective as a near-infrared absorbing material.

Furthermore, it is desirable that the composite tungsten oxide particles preferably have an amorphous phase volume ratio of 50% or less, and the inside of the particles is preferably single crystal. That is, even if the composite tungsten oxide particles have an amorphous phase on the surface, the inside is a single crystal, thus, the composite tungsten oxide particles are substantially single crystals.

If the composite tungsten oxide particles are single crystals, the value of the XRD peak top intensity can be maintained while the crystallite size can be maintained to 100 nm or less, thus, the average particle size can be set to 1 nm or more and 100 nm or less.

On the other hand, even when the average particle size of the composite tungsten fine particle is 1 nm or more and 100 nm or less, in the case when the amorphous phase is present in a volume ratio in excess of 50% or in the case of a polycrystal, the XRD peak top intensity ratio value of the composite tungsten fine particle is less than 0.13, and as a result, the near-infrared absorption properties are insufficient and the contrast between the visible light and the near-infrared light is not sufficiently expressed in some cases. Furthermore, the crystallite size is preferably 100 nm or less and 10 nm or more. More preferably, if the crystallite size is in this range, the XRD peak top intensity ratio value is 0.13 or more, so that the near-infrared absorption properties are exhibited.

Further, it is possible to verify that the composite tungsten oxide particles are single crystals due to the fact that grain boundaries are not observed in each fine particle, but only uniform lattice stripes are observed in an electron microscope image of a transmission electron microscope or the like. Further, it can be verified that the volume ratio of the amorphous phase in the composite tungsten oxide particles is 50% or less, and uniform lattice stripes were observed in the entire particle, and almost no places where the lattice stripes were unclear were observed in the same transmission electron microscope image. There are many cases in which the amorphous phase is present in an outer circumferential part of the particle, thus, by specifically paying attention to the outer circumferential part of the particle, there are many cases in which the volume ratio of the amorphous phase can be calculated. For example, when the amorphous phase in which the lattice stripes are unclear is present in a layered manner on the particle outer circumferential part in a completely spherical composite tungsten oxide particle, and if the thickness is 10% or less of the particle size, the volume ratio of the amorphous phase of the composite tungsten oxide particles is 50% or less.

On the other hand, when the composite tungsten oxide particles are dispersed inside the adhesive layer, if the difference obtained by subtracting the crystallite size from the dispersed average particle size of the composite tungsten oxide particles is 20% or less, the composite tungsten oxide particle can be said to be a single crystal in which the volume ratio of the amorphous phase is 50% or less.

Here the average particle size of the composite tungsten oxide particles can be obtained by measuring the particle size of 100 composite tungsten oxide particles from a transmission electron microscopic image of the adhesive layer using an image processing device, and calculating the average value thereof.

Then, appropriate adjustments may be made in accordance with the production equipment used for the synthesis, pulverization, and dispersion which are described later so that the difference between the average particle size of the composite tungsten oxide particles dispersed in the adhesive layer according to the present invention and the crystallite size is 20% or less.

As described above, the average particle size of the composite tungsten oxide particles contained in the adhesive layer according to the present invention is preferably 200 nm or less, more preferably 10 nm or more and 100 nm or less, more preferably 10 nm or more and 80 nm or less, most 10 nm or more and 60 nm or less.

It is preferable that the crystallite size of the composite tungsten oxide particles is at most 100 nm or less, however, from the viewpoint of the near-infrared absorption properties, the crystallite size of the composite tungsten oxide particles is preferably 10 nm or more. That is, the crystallite size of the composite tungsten oxide particles is preferably 10 nm or more and 100 nm or less, and more preferably 10 nm or more and 80 nm or less, and most 10 nm or more and 60 nm or less. In short, if the crystallite size of the composite tungsten oxide particles is in a range of 10 nm or more and 60 nm or less, the best infrared absorption properties are exhibited.

### (d) Method for synthesizing composite tungsten oxide particles

The method for synthesizing the composite tungsten oxide particles includes a thermal plasma method for charging a tungsten compound starting material into a thermal plasma, and a solid-phase reaction method for heat treating the tungsten compound starting material in a reducing gas atmosphere. The composite tungsten oxide particles synthesized by the thermal plasma method and the solid-phase reaction method are subjected to dispersion treatment or pulverization and dispersion treatment.

Explanations will be provided below in the order of (1) Thermal plasma method, (2) Solid-phase reaction method, and (3) Synthesized composite tungsten oxide particles.

### (1) Thermal plasma method

The thermal plasma method will be explained in the order of (i) Raw material used for the thermal plasma method, and (ii) Thermal plasma method and the conditions thereof.

### (i) Raw material used for the thermal plasma method

When synthesizing the composite tungsten oxide particles by the thermal plasma method, a mixed powder of the tungsten compound and an M element compound can be used as a raw material.

The tungsten compound is preferably one or more kinds selected from tungstic acid (H₂WO₄), ammonium tungstate, tungsten hexachloride, and tungsten hydrate obtained by adding water to the tungsten hexachloride which is dissolved in alcohol, hydrolyzing, and then, evaporating the solvent.

Further, the M element compound is preferably one or more kinds selected from oxides, hydroxides, nitrates, sulfates, chlorides, and carbonates of the M element.

The above-described tungsten compound and the aqueous solution containing the above-described M element compound are wet-mixed such that the ratio of the M element to the W element is MxWyOz (wherein, M is the M element, W is tungsten, O is oxygen, which are wet-mixed so that the ratio of the M element to the W element is 0.001 ≤ x/y ≤ 1.0, 2.0 ≤ z/y ≤ 3.0). Moreover, a mixed powder of the M element compound and the tungsten compound can be obtained by drying the obtained mixture, and the mixed powder can be used as the raw powder of the thermal plasma method.

Further, the composite tungsten oxide obtained by one-step firing in which the mixed powder is fired under the inert gas alone or under a mixed gas atmosphere of the inert gas and the reducing gas, can be used as a raw material of the thermal plasma method. In addition, the composite tungsten oxide obtained by two-step firing in which the mixed powder is fired under a mixed gas atmosphere of the inert gas and the reducing gas in a first step and the fired object of the first step is fired under an inert gas atmosphere in a second step, can be used as a raw material of the thermal plasma method.

### (ii) Thermal plasma method and the conditions thereof

Any one of, for example, DC arc plasma, high frequency plasma, microwave plasma, low frequency alternating current plasma, or, superimposed plasma thereof, or, a plasma generated by an electric method which applies a magnetic field to a direct current plasma, a plasma generated by irradiation with a high output laser, a plasma generated by a large output electron beam or an ion beam can be used as the thermal plasma used in the present invention. Regardless of which thermal plasma is used, the thermal plasma has a high temperature portion of 10000 to 15000 K, and specifically, is preferably a plasma capable of controlling the generation time of the fine particles.

The raw material fed into the thermal plasma having the high temperature part evaporates instantaneously in the high temperature part. Moreover, the evaporated raw material is condensed in the course of reaching a plasma tail flame part, and rapidly solidifies outside the plasma flame to produce the composite tungsten oxide particles.

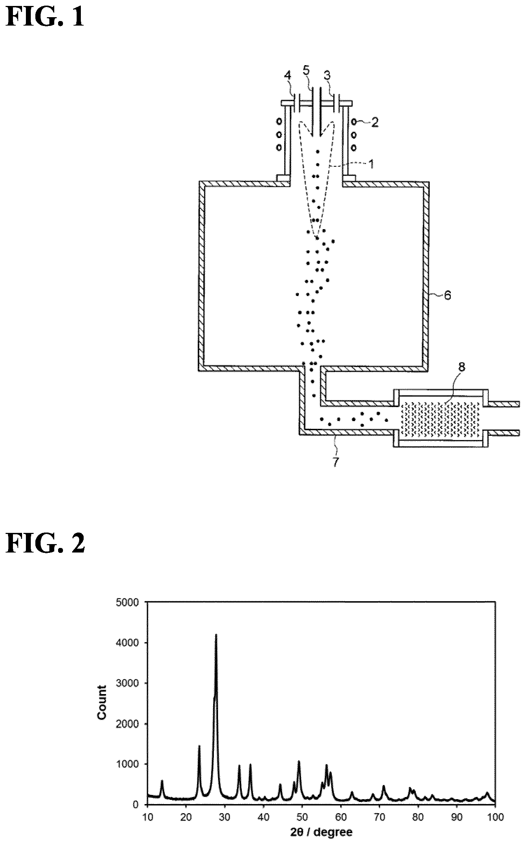

A synthesis method will be described with reference to FIG. 1 taking, as an example, a case of using a high-frequency plasma reaction device.

First, the inside of a reaction system constituted by an inside of a water-cooled quartz double tube and the inside of a reaction vessel 6 is evacuated to approximately 0.1 Pa (approximately 0.001 Torr) by a vacuum exhaust device. After evacuating the inside of the reaction system, the inside of the reaction system is filled with argon gas to make an argon gas flow system of 1 atm.

Then, any gas selected from argon gas, a mixed gas of argon and helium (Ar - He mixed gas), or a mixed gas of argon and nitrogen (Ar - N₂ mixed gas) is introduced into the reaction vessel as a plasma gas at a flow rate of 30 to 45 L/min. On the other hand, the Ar - He mixed gas is introduced at a flow rate of 60 to 70 L/min as the sheath gas to be immediately flowed outside of the plasma region.

Moreover, an alternating current is applied to a high frequency coil 2 to generate the thermal plasma by a high-frequency electromagnetic field (frequency 4 MHz). At this time, the high-frequency power is set to 30 to 40 kW.

The mixed powder of the M element compound and the tungsten compound obtained by the above-described synthesis method, or, the raw materials of the composite tungsten oxide particles are introduced from a raw material powder feeding nozzle 5 into the thermal plasma at a feed rate of 25 to 50 g / min, using the argon gas of 6 to 98 L / min fed from a gas feeding device as a carrier gas to cause a reaction for a predetermined time. After the reaction, the generated composite tungsten oxide particles are deposited on a filter 8, and thereafter, are recovered.

The carrier gas flow amount and the raw material feed rate greatly affect the generation time of the fine particles. Therefore, it is preferable that the carrier gas flow amount is set to 6 L/min or more and 9 L/min or less, and the raw material feed rate is set to 25 to 50 g/min.

Further, the plasma gas flow amount is preferably 30 L/min or more and 45 L/min or less, and the sheath gas flow amount is preferably 60 L/min or more 70 L/min or less. The plasma gas has a function of maintaining a thermal plasma region having a high temperature part of 10000 to 15000 K, and the sheath gas has a function of cooling an inner wall surface of a quartz torch in the reaction vessel and preventing the melting of the quartz torch. At the same time, the plasma gas and the sheath gas affect the shape of the plasma region, and therefore, these gas flow rates are important parameters for controlling the shape of the plasma region. The more the plasma gas and the sheath gas flow amount are increased, the further the shape of the plasma region extends in a gas flow direction, and the more gentle the temperature gradient of the plasma tail flame part becomes, thus, it is possible to lengthen the generation time of the fine particles to be produced, and produce fine particles with a high crystallinity. Conversely, the more the plasma gas and the sheath gas flow amount decrease, the more the shape of the plasma region shrinks in the gas flow direction, and the steeper the temperature gradient of the plasma tail flame part becomes, thus, it is possible to shorten the shape of the plasma region the fine particles to be produced, and produce fine particles having a large BET specific surface area. The XRD peak top intensity ratio value of the composite tungsten oxide particles can be set to a predetermined value thereby.

When the composite tungsten oxide which can be synthesized by the thermal plasma method has a crystallite size exceeding 200 nm, or when the dispersed particle size of the composite tungsten oxide in the adhesive composition obtainable from the composite tungsten oxide which can be synthesized by the thermal plasma method exceeds 200 nm, the pulverization and the dispersion treatment described later can be performed. When the composite tungsten oxide is synthesized by the thermal plasma method, the effect of the present invention is exhibited by appropriately selecting the plasma conditions and then, appropriately selecting the pulverization and the dispersion treatment conditions, and setting the XRD peak top intensity ratio value to be 0.13 or more, which thereby suppresses the difference between the average particle size and the crystallite size of the composite tungsten oxide particles in the adhesive composition to 20% or less.

### (2) Solid phase reaction method

The solid phase reaction method will be described in an order of (i) Raw material used in the solid phase reaction method, and (ii) Firing in the solid-phase reaction method and the conditions.

### (i) Raw material used in the solid phase reaction method

When synthesizing the composite tungsten oxide particles by the solid phase reaction method, a tungsten compound and an M element compound are used as the raw material.

The tungsten compound is preferably one or more selected from tungstic acid (H₂WO₄), ammonium tungstate, tungsten hexachloride, and tungsten hydrate obtained by adding water to the tungsten hexachloride which was dissolved in alcohol, hydrolyzing, and then, evaporating the solvent.

Further, the element M compound used for producing the raw material of the composite tungsten oxide particles expressed by the general formula MxWyOz (wherein, Ms an element of one or more selected from Cs, Rb, K, Tl, and Ba, satisfying 0.001 ≤ x/y ≤ 1, 2.2 ≤ z/y ≤ 3.0) which is a more preferable embodiment is preferably one or more selected from oxides, hydroxides, nitrates, sulfates, chlorides, and carbonates of element M.

Further, the composite tungsten oxide particles may contain a compound containing one or more types of impurity elements selected from Si, Al, and Zr (hereinafter, this may be referred to as the "impurity element compound" in the present invention) as the raw material. The impurity element compound does not react with the composite tungsten compound in a subsequent firing step, and works to suppress the crystal growth of the composite tungsten oxide and prevent coarsening of the crystal. The compound containing the impurity element is, preferably one or more selected from oxides, hydroxides, nitrates, sulfates, chlorides, carbonates, and colloidal silica and colloidal alumina having a particle size of 500 nm or less are particularly preferable.

The above-described tungsten compound the aqueous solution containing the above-described M element compound and the above-described impurity compound are wet-mixed so that the ratio of the M element to the W element is MxWyOz (wherein, M is the M element, W is tungsten, O is oxygen, satisfying 0.001 ≤ x/y ≤ 1.0, 2.0 < z/y ≤ 3.0). When the impurity element compound is contained as a raw material, the impurity element compound is wet mixed to 0.5 mass% or less. Moreover, the mixed powder of the M element compound and the tungsten compound, or the mixed powder of the M element compound containing the impurity element compound and the tungsten compound can be obtained by drying the obtained mixed solution.

### (ii) Firing in the solid phase reaction method and the conditions

The one-step firing is performed by the wet-mixing to the mixed powder of the M element compound and the tungsten compound produced, or the mixed powder of the M element compound containing the impurity element compound and the tungsten compound in the inert gas alone or the gas atmosphere of the inert gas and reducing gas. At this time, the firing temperature is preferably close to the temperature at which composite tungsten oxide particles start to crystallize.

Specifically, the firing temperature is preferably 1000°C or less, more preferably 800°C or less, and still more preferably in a temperature range of 800°C or less and 500°C or more. By controlling the firing temperature, the XRD peak top intensity ratio value of the composite tungsten oxide particles according to the present invention can be set to a predetermined value. By controlling the firing temperature, the XRD peak top intensity ratio value of the composite tungsten oxide particles according to the present invention can be set to a predetermined value.

In the synthesis of the composite tungsten oxide, tungsten trioxide may be used in place of the tungsten compound.

### (3) Synthesized composite tungsten oxide particles

When using the composite tungsten oxide particles obtained by a synthesis method according to the thermal plasma method or the solid phase reaction method to prepare the adhesive layer which is described later, the crystallite size of the fine particle contained in the adhesive layer may exceed 200 nm. In such a case, the composite tungsten oxide particles may be subjected to a pulverization and dispersion treatment in the step of producing the adhesive composition which is described later. Moreover, if the XRD peak top intensity ratio value of the composite tungsten oxide particles obtained via the pulverization and the dispersion treatment is within the range of the present invention, the adhesive composition and the like according to the present invention obtained from the composite tungsten oxide particles and the dispersing liquid thereof exhibit excellent near-infrared absorption properties.

### (e) Summary

The XRD peak top intensity ratio value and the BET specific surface area of the composite tungsten oxide particles may be controlled by changing various production conditions, and for example, can be controlled by changing the production conditions such as the temperature (firing temperature), the generation time (firing time), the generation atmosphere (firing atmosphere), the form of a precursor raw material, the annealing treatment after generation, the doping of an impurity element, and the like, for generating the fine particle by the thermal plasma method or the solid phase reaction method. On the other hand, the content of the volatile component of the composite tungsten oxide particles may be controlled by suitably setting the production conditions such as the preservation method and the storage atmosphere of the fine particle, the temperature at which the ultrafine particles dispersion liquid is dried, the drying time, and the drying method, and the like. However, the content of the volatile component of the composite tungsten oxide particles does not depend on the crystal structure of the composite tungsten oxide particles or the method for synthesizing the composite tungsten oxide particles such as the thermal plasma method or the solid-phase reaction method which are described later.

### (2) Metal coupling agent having an amino group

As described above, there is a case in which the haze of the adhesive layer comprised of the composite tungsten oxide particles becomes high, and an adhesive layer may be inappropriate for the near-infrared absorption film to be applied to the existing window. Further, the stability of the adhesive agent composition is poor, and opaqueness or gelation may occur when retaining the composition, and thus, may be a cause of a reduction of the productivity. Therefore, the inventors of the present invention investigated a method for reducing the haze and improving the stability of the adhesive composition, and discovered that, as described above, the haze could be reduced and the stability could be improved by adding a metal coupling agent having an amino group to the adhesive layer or the adhesive composition.

Further, a light coloring phenomenon which reduces the transmittance may be provided, for example, by exposing the adhesive layer to a strong ultraviolet light for a long period of time. However, according to the investigation by the inventors of the present invention, the light coloring phenomenon can be suppressed, and the weather resistance of the composite tungsten oxide particles can be increased by the adhesive layer according to the present invention comprising the metal coupling agent having an amino group.

The metal coupling agent having an amino group is not specifically limited as long as it includes an amino group in its structure, and for example, a silane coupling agent, a titanate coupling agent, an aluminate-based coupling agent or the like may be used. However, the metal coupling agent having an amino group which is added to the adhesive layer is not limited to one type, and two or more types of metal the coupling agents each having an amino group may be added simultaneously.

Specifically, a silane coupling agent having an amino group, or a titanate coupling agent having an amino group may be preferably used as the metal coupling agent having an amino group.

However, for example, the case when the silane coupling agent having an amino group is used as the metal coupling agent having an amino group in the adhesive layer is not limited to a silane coupling agent having one type of amino group. For example, one, or two or more types of silane coupling agents each having an amino group may be added simultaneously.

Further, based on the type of functional group of the metal coupling agent having an amino group, it is possible to improve the dispersibility of the composite tungsten oxide particles in the adhesive layer, and improve the transparency of the adhesive layer. This is because the functional group containing the metal coupling agent having an amino group absorbed in the composite tungsten oxide particles, and prevents the aggregation with another composite tungsten oxide particle due to steric hindrance. In this case, by the addition of the metal coupling agent having an amino group, both the effect due to the above-described addition of the metal coupling agent having an amino group and the effect due to the addition of the dispersing agent can be brought about. 3-aminopropyltrimethoxysilane, 3-aminopropyltriethoxysilane, 3-(2-aminoethylamino) propyltrimethoxysilane, 3-(2-aminoethylamino)propyldimethoxymethylsilane, trimethoxy [3- (phenylamino) propyl] silane, 3-(2-aminoethylamino) propyltrimethoxysilane, isopropyltri (N-aminoethyl aminoethyl) titanate or the like can be preferably used as the metal coupling agent having an amino group exhibiting this kind of effect.

The content of the metal coupling agent having an amino group in the adhesive layer is not specifically limited, and may be arbitrarily selected in accordance with the visible light transmittance the haze required in the adhesive layer, the weather resistance of the composite tungsten oxide particles, the above-described degree of dispersibility of the particles or the like. The above-described degree of dispersibility of the particles or the like is preferably, for example, 0.01 mass% or more and 0.60 mass% or less, and more preferably 0.01 mass% or more and 0.50 mass% or less. This is because if the content of the metal coupling agent having an amino group is 0.01 mass% or more, the above-described effect by the addition of the metal coupling agent having an amino group can be sufficiently exhibited. Further, if the content is 0.60 mass% or less, the metal coupling agent having an amino group is reliably suppressed from being depositing on the adhesive layer, and the transparency or design of the adhesive layer is not greatly affected.

The content ratio of the metal coupling agent having an amino group with respect to the composite tungsten oxide particles is not specifically limited. For example, the content is optionally selected in accordance with the visible light transmittance or the haze required in the adhesive layer, the weather resistance of the composite tungsten oxide particles, the above-described degree of dispersibility of the particles or the like. For example, the adhesive layer preferably includes 1 part by mass or more and 100 parts by mass or less of the metal coupling agent having an amino group, based on 100 parts by mass of the composite tungsten oxide particles.

This is because when the adhesive layer includes the metal coupling agent having an amino group at a ratio of 1 part by mass or more based on 100 parts by mass of the composite tungsten oxide particles, the stability of the adhesive agent composition can be sufficiently retained, and the generation of opaqueness or gelation can be reliably suppressed. Thus, the haze of the adhesive layer can be suppressed, and the adhesive layer can be formed with a good productivity. Further, the weather resistance of the composite tungsten oxide particles can be increased.

Moreover, when the adhesive layer includes the metal coupling agent having an amino group at a ratio of 100 parts by mass or less, based on 100 parts by mass of the composite tungsten oxide particles, the deposition of the metal coupling agent having an amino group can be reliably suppressed. Thus, the transparency or the design of the adhesive layer is not greatly affected.

However, when the adhesive layer is comprised of two or more of the composite tungsten oxide particles, it is preferable that the content of the metal coupling agent having an amino group satisfies the above-described range in the case when the total content of both of the particles included in the adhesive layer was set to 100 parts by mass.

Further, even in the adhesive composition, the ratio of the metal coupling agent having an amino group with respect to the composite tungsten oxide particles is preferably the same as the above-described adhesive layer.

### (3) Adhesive

The adhesive included in the adhesive layer according to the present invention is also not specifically limited, but the adhesive preferably includes one or more types of polymers selected from an acrylic-based polymer, an epoxy-based polymer, a urethane-based polymer, a styrene acrylic-based polymer, a polyester-based polymer, a silicone-based polymer and the like. Specifically, it is more preferable that the adhesive layer includes an acrylic-based polymer.

However, the adhesive included in the adhesive layer according to the present invention is derived from the adhesive added to the adhesive composition. The content of the adhesive in the adhesive composition is not specifically limited, but when the solid content including the adhesive in the adhesive composition is 100 mass%, the content of the adhesive in the solid content including the adhesive in the adhesive composition is preferably 50 mass% or more, and more preferably 60 mass% or more.

When the solid content including the adhesive in the adhesive composition is 100 mass%, an upper limit value of the content of the adhesive in the solid content including the adhesive in the adhesive composition is not specifically limited, but is preferably 99.999 mass% or less.

As described above, the adhesive preferably includes an acrylic-based polymer. Moreover, the acrylic-based polymer is preferably a polymer constituted by, specifically, (meth)acrylic acid alkyl ester having carbon number of the alkyl group of 1 or more and 12 or less (also referred to as "(meth)acrylic acid C1-12 alkyl ester") and/or (meth)acrylic acid alcoxy alkyl ester as a main monomer component (monomer main constituent). Another co-monomer component may be included in the monomer component composing the adhesive, in addition to the above-described monomer main constituent. "(Meth) acrylic" means "acrylic" and / or "methacrylic". The same applies to the following.

The above-described (meth)acrylic acid C1-12 alkyl ester is (meth)acrylic acid alkyl ester including a linear or branched-chain alkyl group whose carbon number is 1 or more and 12 or less, and is not specifically limited, but for example, methyl (meth)acrylate, ethyl (meth)acrylate, propyl (meth)acrylate, isopropyl (meth)acrylate, n-butyl (meth)acrylate, isobutyl (meth)acrylate, sec-butyl (meth)acrylate, t-butyl (meth)acrylate, pentyl (meth)acrylate, isopentyl (meth)acrylate, neo-pentyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate and the like may be exemplified. Thereamong, one or more selected from ethyl acrylate, n-butyl acrylate, 2-ethylhexyl acrylate and isononyl acrylate can be preferably used as the (meth)acrylic acid C1-12 alkyl ester. Specifically, one or more selected from 2-ethylhexyl acrylate (2EHA) and n-butyl acrylate (BA) are more preferably used. The above-described (meth)acrylic acid C1-12 alkyl ester may be used alone, or two or more types may be used in combination.

The above-described (meth)acrylic acid alcoxy alkyl ester is not specifically limited, but, for example, 2-methoxyethyl (meth)acrylate, 2-ethoxyethyl (meth)acrylate, methoxytriethylene glycol (meth)acrylate, 3-methoxypropyl (meth)acrylate, 3-ethoxypropyl (meth)acrylate, 4-methoxybutyl (meth)acrylate, 4-ethoxybutyl (meth)acrylate and the like may be exemplified. Thereamong, alcoxy alkyl acrylate is preferable, and specifically, 2-methoxyethyl acrylate (2MEA) is more preferable. The above-described (meth)acrylic acid alcoxy alkyl ester may be used alone, or two or more types may be used in combination.

The content of the (meth)acrylic acid C1-12 alkyl ester and/or the (meth)acrylic acid alcoxy alkyl ester which is the monomer main constituent is preferably 50 mass% or more, more preferably 80 mass% or more, and further preferably 90 mass% or more, based on a total monomer components (the total amount of the monomer components)(100 mass%) composing the acrylic-based polymer.

However, an upper limit of the content based on a total monomer components is not specifically limited, but is preferably 99.5 mass% or less, and more preferably 99 mass% or less. When both of the (meth)acrylic acid C1-12 alkyl ester and the (meth)acrylic acid alcoxy alkyl ester are used as the monomer components, the total (total content) of the content of the (meth)acrylic acid C1-12 alkyl ester and the content of the (meth)acrylic acid alcoxy alkyl ester preferably satisfies the above-described range.

Further, polar group-containing monomer, polyfunctional monomer and other copolymerizable monomer may be contained in a monomer component that composes the above acrylic polymer, as a copolymerizable monomer component.

Examples of the above-described polar group-containing monomer includes a monomer including a carboxyl group such as (meth)acrylic acid, itaconic acid, maleic acid, fumaric acid, crotonic acid or isocrotonic acid, or its anhydride (maleic anhydride or the like); a monomer including a hydroxyl group such as hydroxyalkyl (meth)acrylate such as 2-hydroxyethyl (meth)acrylate, 3-hydroxypropyl (meth)acrylate, 4-hydroxybutyl (meth)acrylate or 6-hydroxyhexyl (meth)acrylate, vinyl alcohol or allyl alcohol; a monomer having an amido group such as (meth)acrylamide, N,N-dimethyl(meth)acrylamide, N-methylol(meth)acrylamide, N-methoxymethyl(meth)acrylamide, N-butoxymethyl(meth)acrylamide or N-hydroxyethylacrylamide; a monomer having an amino group such as aminoethyl (meth)acrylate, dimethylaminoethyl (meth)acrylate or t-butylaminoethyl (meth)acrylate; a monomer including a glycidyl group such as glycidyl (meth)acrylate or methylglycidyl (meth)acrylate; a monomer including a cyano group such as acrylonitrile or methacrylonitrile; a vinyl-based heterocyclic monomer such as N-vinylpyridine, N-vinylpiperidone, N-vinylpyrimidine, N-vinylpiperazine, N-vinylpyrrole, N-vinyllimidazole or N-vinyloxazole in addition to N-vinyl-2-pyrrolidone or (meth)acryloylmorpholine; a monomer including a sulfonic group such as sodium vinylsulfonate; a monomer including a phosphoric acid group such as 2-hydroxyethylacryloylphosphate; a monomer having an imido group such as cyclohexylmaleimide or isopropylmaleimide; a monomer having an isocyanate group such as 2-methacryloyloxyethylisocyanate, or the like. The above-described polar group-containing monomer may be used alone, or two or more types may be used in combination. Among the above-described, the polar group-containing monomer is preferably comprised of one or more selected from a monomer including a carboxyl group or its anhydride and a monomer including a hydroxyl group, and specifically, is more preferably comprised of one or more selected from acrylic acid (AA), 4-hydroxybutyl acrylate (4HBA) and 2-hydroxyethyl acrylate (HEA).

The content of the above-described polar group-containing monomer is preferably 15 mass% or less, and more preferably 10 mass% or less, based on a total monomer components (total amount of the monomer components) (100 mass%) composing the acrylic-based polymer. This is because if the content of the polar group-containing monomer is in excess of 15 mass%, for example, the aggregation force of the adhesive layer becomes too high, and adhesion may be lowered, or the polar group becomes a crosslinking point, thereby causing too dense crosslinking.

A lower limit value of the content of the above-described polar group-containing monomer is not specifically limited, but, for example, is preferably 0.01 mass% or more, and more preferably 0.5 mass% or more, based on a total monomer components (total amount of the monomer components) (100 mass%) composing the acrylic-based polymer. This is because the adhesion of the adhesive layer can be specifically increased, and the cross-linking reaction can be specifically set to an appropriate rate by setting the content of the polar group-containing monomer to 0.01 mass% or more.

Further, examples of the polyfunctional monomer include hexanediol di(meth)acrylate, butanediol di(meth)acrylate, (poly)ethylene glycol di(meth)acrylate, (poly)propylene glycol di(meth)acrylate, neo-pentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, urethan acrylate or the like.

The content of the above-described polyfunctional monomer is not specifically limited, but is preferably 0.5 mass% or less, and more preferably 0.1 mass% or less, based on a total monomer components (total amount of the monomer components) (100 mass%) composing the acrylic-based polymer.

This is because if the content of the above-described polyfunctional monomer is in excess of 0.5 mass% based on atotal monomer components (total amount of the monomer components) (100 mass%) composing the acrylic-based polymer, for example, the adhesion of the adhesive layer may decrease.

A lower limit value of the content of the above-described polyfunctional monomer is not specifically limited, but, for example, can be 0 mass% or more, based on a total monomer components (total amount of the monomer components) (100 mass%) composing the acrylic-based polymer.

Further, examples of the co-monomer (the other co-monomer) other than the above-described polar group-containing monomer and the polyfunctional monomer include (meth)acrylic acid alkyl ester in which the carbon number of the alkyl group is 13 or more and 20 or less such as tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate or eicosyl (meth)acrylate; (meth)acrylic acid ester other than the above-described (meth)acrylic acid alkyl ester, the (meth)acrylic acid alcoxy alkyl ester, the polar group-containing monomer and the polyfunctional monomer, such as (meth)acrylic acid ester having an alicyclic hydrocarbon group such as cyclopentyl (meth)acrylate, cyclohexyl (meth)acrylate or isobornyl (meth)acrylate or an aromatic hydrocarbon group such as phenyl (meth)acrylate; vinyl ester such as vinyl acetate or vinyl propionate; an aromatic vinyl compound such as styrene or vinyltoluene; olefins or dienes such as ethylene, butadiene, isoprene or isobutylene; vinylethers such as vinylalkylether; vinyl chloride or the like.

The acrylic-based polymer can be prepared by various polymerization methods. Examples of the polymerization method of the acrylic-based polymer include a solution polymerization method, an emulsion polymerization method, a block polymerization method, a polymerization method by ultraviolet irradiation or the like, but the solution polymerization method is preferable from the point of transparency, water-resistance, cost or the like.

A polymerization initiator used in polymerizing the acrylic-based polymer is not specifically limited, and is an arbitrarily selected from among various polymerization initiators can eb used. More specifically, examples of the polymerization initiator include an oil-soluble polymerization initiator such as an azo-based polymerization initiator such as 2,2'-azobis isobutyronitrile, 2,2'-azobis(4-methoxy-2,4-dimethyl valeronitrile), 2,2'-azobis(2,4-dimethyl valeronitrile), 2,2'-azobis(2-methyl butyronitrile), 1,1'-azobis(cyclohexane-1-carbonitrile), 2,2'-azobis(2,4,4-trimethyl pentane) or dimethyl-2,2'-azobis(2-methylpropionate); or a peroxide-based polymerization initiator such as benzoyl peroxide, t-butyl hydroperoxide, di-t-butyl peroxide, t-butyl peroxybenzoate, dicumyl peroxide, 1,1-bis(t-butylperoxy)-3,3,5-trimethyl cyclohexane or 1,1-bis(t-butylperoxy)cyclododecane. The polymerization initiator may be solely alone, or two or more types may be used in combination. The usage amount of polymerization initiator may be a normal usage amount, and for example, may be selected from a range of about 0.01 parts by mass or more and 1 part by mass or less of the polymerization initiator, based on 100 parts by mass of the total monomer components composing the acrylic-based polymer.

However, various general solvents may be used in the solution polymerization. As such a solvent, an organic solvent such as an ester such as ethyl acetate or n-butyl acetate; an aromatic hydrocarbon such as toluene or benzene; an aliphatic hydrocarbon such as n-hexane or n-heptane; an alicyclic hydrocarbon such as cyclohexane or methylcyclohexane or a ketone such as methyl ethyl ketone or methyl isobutyl ketone may be exemplified. The solvent may be used alone, or two or more types may be used in combination.

The weight average molecular weight of the acrylic-based polymer is preferably 500,000 or more and 1,200,000 or less, more preferably, 600,000 or more and 1,000,000 or less, and further preferably, 600,000 or more and 900,000 or less.

In the adhesive layer according to the present invention, it is preferable that the solid constituent concentration of the adhesive composition (solution) which used when forming the adhesive layer is large, and the thickness of the coated layer of the adhesive composition during drying, that is, the film layer containing the solvent is thin. This is because the unevenness in the thickness of the entirety of the adhesive layer is easily reduced by suppressing convection in the coated layer during drying.

Moreover, when the weight average molecular weight of the acrylic-based polymer is high, the viscosity of the adhesive agent composition, at the same solid content concentration, becomes high compared to when the weight average molecular weight is low. Thus, when the weight average molecular weight of the acrylic-based polymer exceeds 1,200,000, it is not possible to make the solid content concentration of the adhesive composition high from the viewpoint of the coating properties, and accordingly, the unevenness in thickness of the entire surface may be large. Thus, as described above, the weight average molecular weight of the acrylic-based polymer is preferably 1,200,000 or less.

On the other hand, when the weight average molecular weight is less than 500,000, the weight average molecular weight of sol may decrease and the durability of the adhesive layer may deteriorate. Thus, as described above, the weight average molecular weight of the acrylic-based polymer is preferably 500,000 or more.

However, the weight average molecular weight of the acrylic-based polymer can be controlled by the monomer concentration, the monomer dropping speed or the like in addition to the type of polymerization initiator, its usage amount thereof or the temperature or time during polymerization.

### (4) Dispersant, Cross-Linking Agent, Other Components

The adhesive layer according to the present invention may be comprised of a dispersing agent, a cross-linking agent and optional components in addition to the above-described composite tungsten oxide particles, the metal coupling agent having an amino group and the adhesive. The dispersing agent, the cross-linking agent and the optional components are described below.

The adhesive layer according to the present invention can include the dispersing agent in order to uniformly disperse the above-described composite tungsten oxide particles in the adhesive.

The dispersing agent is not specifically limited, and may be arbitrarily selected in accordance with the production conditions or the like of the adhesive layer. The dispersing agent is preferably, for example, a high molecular dispersing agent, and more preferably is a dispersing agent having a main chain selected from any of a polyester-based, a polyether-based, a polyacryl-based, a polyurethane-based, a polyamine-based, polystyrene-based and an aliphatic-based chains, or a main chain in which two or more types of unit structures selected from a polyester-based, a polyether-based, a polyacryl-based, polyurethane-based, a polyamine-based, a polystyrene-based and an aliphatic-based unit structures were copolymerized.

Further, the dispersing agent preferably includes as a functional group one or more selected from a group having an amine, a hydroxyl group, a carboxyl group, a group including a carboxyl group, a sulfo group, a phosphate group and an epoxy group. The dispersing agent having any of the above-described functional groups can be absorbed to a surface of the composite tungsten oxide particles, and the aggregation of the composite tungsten oxide particles can be reliably prevented. Thus, this dispersing agent is preferably used since the composite tungsten oxide particles can be furthermore uniformly dispersed in the adhesive layer.

As such a dispersing agent, SOLSPERSE 9000, SOLSPERSE 12000, SOLSPERSE 17000, SOLSPERSE 20000, SOLSPERSE 21000, SOLSPERSE 24000, SOLSPERSE 26000, SOLSPERSE 27000, SOLSPERSE 28000, SOLSPERSE 32000, SOLSPERSE 35100, SOLSPERSE 54000, and SOLTHIX 250 (produced by the Lubrizol Corporation), EFKA4008, EFKA4009, EFKA4010, EFKA4015, EFKA4046, EFKA4047, EFKA4060, EFKA4080, EFKA7462, EFKA4020, EFKA4050, EFKA4055, EFKA4400, EFKA4401, EFKA4402, EFKA4403, EFKA4300, EFKA4320, EFKA4330, EFKA4340, EFKA6220, EFKA6225, EFKA6700, EFKA6780, EFKA6782, and EFKA8503 (produced by EFKA Additives), AJISPER PA111, AJISPER PB821, AJISPER PB822, AJISPERPN411, and FAMEX L-12 (produced by Ajinomoto Fine-Techno Co., Inc.), DisperBYK101, DisperBYK102, DisperBYK106, DisperBYK108, DisperBYK111, DisperBYK116, DisperBYK130, DisperBYK140, DisperBYK142, DisperBYK145, DisperBYK161, DisperBYK162, DisperBYK163, DisperBYK164, DisperBYK166, DisperBYK167, DisperBYK168, DisperBYK170, DisperBYK171, DisperBYK174, DisperBYK180, DisperBYK182, DisperBYK192, DisperBYK193, DisperBYK2000, DisperBYK2001, DisperBYK2020, DisperBYK2025, DisperBYK2050, DisperBYK2070, DisperBYK2155, DisperBYK2164, BYK220S, BYK300, BYK306, BYK320, BYK322, BYK325, BYK330, BYK340, BYK350, BYK377, BYK378, BYK380N, BYK410, BYK425, and BYK430 (produced by BYK Japan KK), DISPARLON 1751N, DISPARLON 1831, DISPARLON 1850, DISPARLON 1860, DISPARLON 1934, DISPARLON DA-400N, DISPARLON DA-703-50, DISPARLON DA-725, DISPARLON DA-705, DISPARLON DA-7301, DISPARLON DN-900, DISPARLON NS-5210, and DISPARLON NVI-8514L (produced by Kusumoto Chemicals, Ltd.), ALPHON UC-3000, ALPHON UF-5022, ALPHON UG-4010, ALPHON UG-4035, and ALPHON UG-4070 (produced by Toagosei Co., Ltd.) may be exemplified.

Examples of the dispersing agent having any of the functional groups described above specifically include an acrylic-based dispersing agent including a group having an amine as the functional group, an acryl-styrene copolymer-based dispersing agent including a carboxyl group as the functional group or the like.

Moreover, the dispersing agent including a group having an amine in the functional group preferably has a molecular weight Mw of 2,000 or more and 200,000 or less. Further, the dispersing agent including a group having an amine in the functional group preferably has an amine value of 5 mg KOH/g or more and 100 mg KOH/g or less. The dispersing agent including a carboxyl group preferably has a molecular weight Mw of 2,000 or more and 200,000 or less. Further, the dispersing agent including a carboxyl group preferably has an acid value of 1 mg KOH/g or more and 100 mg KOH/g or less.

The content of the dispersing agent of the adhesive layer according to the present invention is not specifically limited, but, for example, the content of the dispersing agent is preferably 10 parts by mass or more and 1000 parts by mass or less, and more preferably 30 parts by mass or more and 400 parts by mass or less, based on 100 parts by mass of the composite tungsten oxide particles.

If the content of the dispersing agent is in the above-described range, the composite tungsten oxide particles can be furthermore reliably and uniformly dispersed in the adhesive, the transparency of the obtained adhesive layer increases, and the near-infrared light absorbent effect can be increased.

However, when the adhesive layer is comprised of the composite tungsten oxide particles, the content of the dispersing agent preferably satisfies the above-described range when the total content of both of the particles included in the adhesive layer is set as 100 parts by mass.

The adhesive layer according to the present invention can be comprised of the cross-linking agent. By including the cross-linking agent, the adhesive can be crosslinked, and the adhesives can be polymerized and adhere to each other. Further, the weight average molecular weight of the sol constituent of the adhesive layer can be adjusted.

The cross-linking agent is not specifically limited, and can be arbitrarily selected, for example, in accordance with materials or the like of the adhesive. For example, one or more selected from a polyfunctional melamine compound (melamine-based cross-linking agent), a polyfunctional isocyanate compound (isocyanate-based cross-linking agent), a polyfunctional epoxy compound (epoxy-based cross-linking agent) and the like can be preferably used as the cross-linking agent. Thereamong, one or more selected from isocyanate-based cross-linking agents and epoxy-based cross-linking agents can be more preferably used. The cross-linking agent can be used alone, or two or more types may be used in combination.

Examples of the above-described melamine-based cross-linking agent include methylated trimethylol melamine, butylated hexamethylol melamine or the like.

Examples of the above-described isocyanate-based cross-linking agent include lower aliphatic polyisocyanates such as 1,2-ethylene diisocyanate, 1,4-butylene diisocyanate or 1,6-hexamethylene diisocyanate; alicyclic polyisocyanates such as cyclopentylene diisocyanate, cyclohexylene diisocyanate, isophorone diisocyanate, hydrogenated tolylene diisocyanate or hydrogenated xylene diisocyanate; aromatic polyisocyanates such as 2,4-tolylene diisocyanate, 2,6-tolylene diisocyanate, 4,4'-diphenyl methane diisocyanate or xylylene diisocyanate, or the like. In addition, trimethylolpropane/tolylene diisocyanate adduct (for example, product name "CORONATE L", produced by Nippon Polyurethane Industry Co., Ltd.), trimethylolpropane/hexamethylene diisocyanate adduct (for example, product name "CORONATE HL", produced by Nippon Polyurethane Industry Co., Ltd.) or the like may be exemplified as well.

Examples of the above-described epoxy-based cross-linking agent include epoxy-based resin having two or more epoxy groups in a molecule or the like, in addition to N,N,N',N'-tetraglycidyl-m-xylene diamine, diglycidyl aniline, 1,3-bis(N,N-diglycidyl aminomethyl)cyclohexane, 1,6-hexanedioldiglycidyl ether, neo-pentylglycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylol propanepolyglycidyl ether, adipic acid diglycidyl ester, o-phthalic acid diglycidyl ester, triglycidyl-tris(2-hydroxyethyl)isocyanurate, resorcin diglycidyl ether and bisphenol-S-diglycidyl ether. Examples of a commercially available product include product name "TETRAD C" produced by MITSUBISHI GAS CHEMICAL COMPANY, INC. or the like.

The content of the cross-linking agent of the adhesive layer according to the present invention is not specifically limited, but for example, is generally preferably 0.001 part by mass or more and 20 parts by mass or less, and more preferably 0.01 part by mass or more and 10 parts by mass or less, based on 100 parts by mass of the adhesive.

Especially, when an isocyanate-based cross-linking agent is used as the cross-linking agent, the content of the isocyanate-based cross-linking agent is preferably 0.01 part by mass or more and 20 parts by mass or less, and more preferably 0.01 part by mass or more and 3 parts by mass or less, based on 100 parts by mass of the adhesive.

Further, when an epoxy-based cross-linking agent is used, the usage amount of the epoxy-based cross-linking agent is preferably 0.001 part by mass or more and 5 parts by mass or less, and more preferably 0.01 part by mass or more and 5 parts by mass or less, based on 100 parts by mass of the adhesive.

The adhesive layer according to the present invention may include, according to need, in addition to the adhesive, the dispersing agent and the cross-linking agent, additives or the like such as an ultraviolet absorbing agent, an antioxidant, a light stabilizer, a tackifier, a plasticizer, a softener, fillers, a colorant (such as a pigment or dye), a surfactant or an antistatic agent.

As described above, since the composite tungsten oxide particles are added to the adhesive layer according to the present invention, the transmission of light mainly at the near-infrared region can be suppressed. Thus, the transmission of the near-infrared light can be suppressed, and it is possible to suppress the rise in temperature in an interior region where the adhesive layer is arranged.

Moreover, by the adhesive layer according to the present invention being further comprised of the ultraviolet absorbing agent, it is possible to further cut the light at the ultraviolet region, and the effect which suppresses the rise in temperature specifically increases. Further, by the adhesive layer according to the present invention being comprised of the ultraviolet absorbing agent, for example, the influence of ultraviolet light to a human or an interior in an automobile or a building having windows to which the near-infrared absorption film including the adhesive layer according to the present invention was attached, sunburn or the deterioration of furniture, an interior or the like can be specifically suppressed.

Further, the light coloring phenomenon by which the transmittance decreases due to the exposure to strong ultraviolet light for a long period of time may occur in the adhesive layer in which the composite tungsten oxide particles were dispersed in the adhesive. However, the occurrence of the light coloring phenomenon can be suppressed even if the adhesive layer according to the present invention is comprised of the ultraviolet absorbing agent.

The ultraviolet absorbing agent is not specifically limited, and can be arbitrarily selected in accordance with the influence applied to the visible light transmittance and the like of the adhesive layer, the ultraviolet absorbing capability, the durability or the like. Examples of the ultraviolet absorbing agent include an organic ultraviolet absorbing agent such as a benzotriazole compound, a benzophenone compound, a salicylic acid compound, a triazine compound, a benzotriazolyl compound or a benzoyl compound, an inorganic ultraviolet absorbing agent such as zinc oxide, titanium oxide or cerium dioxide, or the like. Specifically, the ultraviolet absorbing agent is preferably comprised one or more selected from a benzotriazole compound or a benzophenone compound. This is because the benzotriazole compound or the benzophenone compound can remarkably increase the visible light transmittance of the adhesive layer even when added at a concentration sufficient to absorb ultraviolet light, and have high durability against the exposure to strong ultraviolet light for a long period of time.

Further, the ultraviolet absorbing agent more preferably is comprised of a compound, for example, represented by the following chemical formula 1 and/or chemical formula 2.

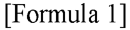

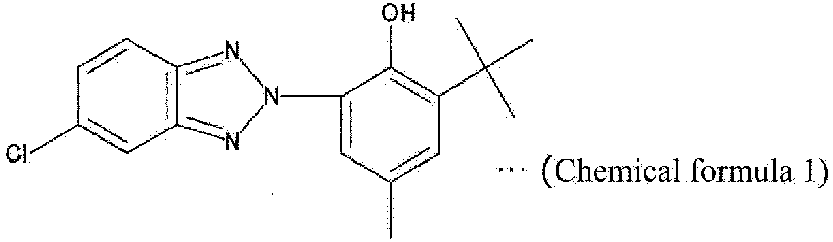

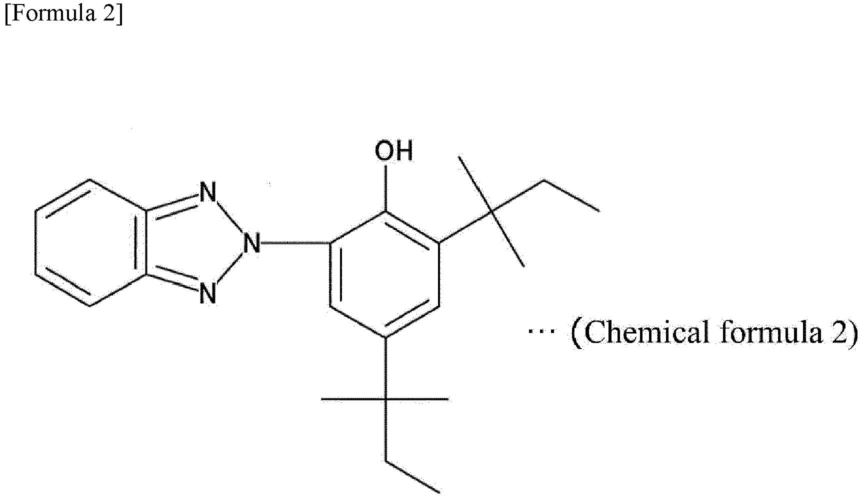

The content of the ultraviolet absorbing agent of the adhesive layer is not specifically limited, and can be arbitrarily selected in accordance the visible light transmittance which is required in the adhesive layer, ultraviolet light absorption capability and the like. The content (content percentage) of the ultraviolet absorbing agent in the adhesive layer is, for example, preferably 0.02 mass% or more and 5.0 mass% or less. This is because if the content of the ultraviolet absorbing agent is 0.02 mass% or more, the light in the ultraviolet region which cannot be absorbed can be sufficiently absorbed by the ultraviolet absorbing agent. Further, if the content is 5.0 mass% or less, the deposition of the ultraviolet absorbing agent on the adhesive layer can be reliably prevented, and the transparency or the design of the adhesive layer is not largely influenced.

Further, the adhesive layer according to the present invention the adhesive layer of the embodiment can be further comprised of a HALS (hindered amine-based light stabilizer). By including the ultraviolet absorbing agent, as described above, the ultraviolet light absorption capability can increase in the near-infrared absorption film comprised of the ultraviolet absorbing agent and the adhesive layer according to the present invention. However, depending on the environment in which the adhesive layer according to the present invention, the near-infrared absorption film comprised of the adhesive layer and the like is used, or the type of ultraviolet absorbing agent, the ultraviolet absorbing agent may deteriorate in accordance with use over a long period of time, and the ultraviolet light absorption capability may decrease. With respect thereto, the adhesive layer comprised of the HALS can prevent the deterioration of the ultraviolet absorbing agent, and can contribute to the maintenance of the ultraviolet light absorption capability of the adhesive layer according to the present invention, the near-infrared absorption film and the like containing the adhesive layer.

Further, as described above, the light coloring phenomenon by which the transmittance decreases due to the exposure to strong ultraviolet light for a long period of time may occur in the adhesive layer in which the composite tungsten oxide particles were dispersed in the adhesive. However, the occurrence of the light coloring phenomenon can be suppressed even when the adhesive layer according to the present invention is comprised of the HALS, in the same manner as the case of the ultraviolet absorbing agent or the metal coupling agent having an amino group.

However, an effect which suppresses the generation of the light coloring phenomenon due to the inclusion of the HALS is clearly based on a different mechanism than the effect which suppresses the light coloring phenomenon due to the inclusion of the metal coupling agent having an amino group.

Thus, the effect which suppresses the generation of the light coloring phenomenon due to the addition of the HALS, and the effect which suppresses the generation of the light coloring phenomenon due to the addition of the metal coupling agent having an amino group do not conflict and function synergistically, and the generation of the light coloring phenomenon can be specifically suppressed.

Furthermore, among the HALS, there are compounds that have the ultraviolet absorption capability. In this case, due to the addition of the compound, the above-described effect due to the addition of the ultraviolet absorbing agent can be combined with the effect due to the addition of the HALS.

The HALS is not specifically limited, and may be arbitrarily selected in accordance with the influence applied to the visible light transmittance or the like of the adhesive layer, the compatibility with the ultraviolet absorbing agent, the durability and the like. As the HALS, for example, bis(2,2,6,6-tetramethyl-4-piperidyl)sebacate, bis(1,2,2,6,6-pentamethyl-4-piperidyl)sebacate, 1-[2-[3-(3,5-t-butyl-4-hydroxyphenyl)propionyloxy]ethyl]-4-[3-(3,5-di-t-butyl-4-hydroxyphenyl)propionyloxy]-2,2,6,6-tetramethylpiperidine, 4-benzoyloxy-2,2,6,6-tetramethylpiperidine, 8-acetyl-3-dodecyl-7,7,9,9-tetramethyl-1,3,8-triazaspiro[4,5]decane-2,4-dione, bis-(1,2,2,6,6-pentamethyl-4-piperidyl)-2-(3,5-di-t-butyl-4-hydroxybenzyl)-2-n-butylmalonate, tetrakis(1,2,2,6,6-pentamethyl-4-piperidyl)-1,2,3,4-butanetetracarboxylate, tetrakis(2,2,6,6-tetramethyl-4-piperidyl)-1,2,3,4-butanetetracarboxylate, (Mixed 1,2,2,6,6-pentamethyl-4-piperidyl/tridecyl)-1,2,3,4-butanetetracarboxylate, Mixed {1,2,2,6,6-pentamethyl-4-piperidyl/β,β,β',β'-tetramethyl-3,9-[2,4,8,10-tetraoxaspiro(5,5)undecane]diethyl}-1,2,3,4-butanetetracarboxylate, (Mixed 2,2,6,6-tetramethyl-4-piperidyl/tridecyl)-1,2,3,4-butanetetracarboxylate, Mixed {2,2,6,6-tetramethyl-4-piperidyl/β,β,β',β'-tetramethyl-3,9-[2,4,8,10-tetraoxaspiro(5,5)undecane]diethyl}-1,2,3,4-butanetetracarboxylate, 2,2,6,6-tetramethyl-4-piperidyl methacrylate, 1,2,2,6,6-pentamethyl-4-piperidyl methacrylate, poly[(6-(1,1,3,3-tetramethylbutyl)imino-1,3,5-triazine-2,4-diyl)][(2,2,6,6-tetramethyl-4-piperidyl)imino]hexamethylene [(2,2,6,6-tetramethyl-4-piperidyl)iminol], a polymer of succinic acid dimethyl and 4-hydroxy-2,2,6,6-tetramethyl-1-piperidineethanol, N,N',N",N'"-tetrakis-(4,6-bis-(butyl-(N-methyl-2,2,6,6-tetramethylpiperidine-4-yl)amino)-triazine-2-yl)-4,7-diazadecane-l,10-diamine, a condensation polymer of dibutylamine-1,3,5-triazine-N,N'-bis(2,2,6,6-tetramethyl-4-piperidyl-1,6-hexamethylene diamine and N-(2,2,6,6-tetramethylpiperidyl)butylamine, decanedioicacid bis(2,2,6,6-tetramethyl-1-(octyloxy)-4-piperidinyl)ester or the like may be preferably used.

The content of HALS of the adhesive layer is not specifically limited, and can be arbitrarily selected in accordance with the visible light transmittance, the weather resistance and the like required in the adhesive layer. The content (content percentage) of the HALS in the adhesive layer is preferably, for example, 0.05 mass% or more and 5.0 mass% or less. This is because if the content of the HALS in the adhesive layer is 0.05 mass% or more, the effect due to the addition of the HALS can be sufficiently exhibited in the adhesive layer. Further, if the content is 5.0 mass% or less, the deposition of the HALS on the adhesive layer can be reliably prevented, and the transparency or the design of the adhesive layer is not largely influenced.

Further, the adhesive layer according to the present invention may be further comprised of an antioxidant.

By the adhesive layer being comprised of an antioxidant, the oxidation degradation of the adhesive contained in the adhesive layer can be suppressed, and the weather resistance of the adhesive layer can be further improved. Further, the oxidation degradation of the other additives included in the adhesive, for example, the composite tungsten oxide, the tungsten oxide, the metal coupling agent having an amino group, the ultraviolet absorbing agent, the HALS and the like can be suppressed, and the weather resistance can be improved.

The antioxidant is not specifically limited, and can be arbitrarily selected in accordance with the influence applied to the visible light transmittance of the adhesive layer, the desired weather resistance and the like. For example, a phenol-based antioxidant, a sulfur-based antioxidant, a phosphorus-based antioxidant or the like may be preferably used. Specifically, 2,6-di-t-butyl-p-cresol, butylated hydroxyanisole, 2,6-di-t-butyl-4-ethylphenol, stearyl- -(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, isooctyl-3-(3,5-di-t-butyl-4-hydroxyphenyl)propionate or the like may be preferably used as the antioxidant.

The content of the antioxidant of the adhesive layer is not specifically limited, and can be arbitrarily selected in accordance with the visible light transmittance, the weather resistance and the like required in the adhesive layer. The content (content percentage) of the antioxidant in the adhesive layer is preferably, for example, 0.05 mass% or more and 5.0 mass% or less. This is because if the content of the antioxidant is 0.05 mass% or more, the effect due to the addition of the antioxidant can be sufficiently exhibited in the adhesive layer. Further, if the content is 5.0 mass% or less, the deposition of the antioxidant on the adhesive layer can be reliably prevented, and the transparency or the design of the adhesive layer is not largely influenced.

The ultraviolet absorbing agent, the HALS and the antioxidant are described as the components which can be optionally added other than the dispersing agent and the cross-linking agent, but the adhesive layer according to the present invention may also be comprised of, other than the above, a surfactant, an antistatic agent or the like.

### (5) Solvent

Various types of organic solvents can be used as the adhesive composition solvent according to the present invention.

The organic solvent is added as a solvent for mixing the components included in the adhesive composition according to the present invention, and materials having a low reactivity with each of the components included in the adhesive composition according to the present invention is preferably used. As the organic solvent, for example, various types of solvents such as alcohol-based solvents, ketone-based solvents, ester-based solvents, glycol-based solvents, glycol ether-based solvents, amido-based solvents, hydrocarbon-based solvents, halogen-based solvents and the like may be selected. Specifically, an alcohol-based solvent such as methanol, ethanol, 1-propanol, isopropanol, butanol, pentanol, benzylalcohol, diacetonealcohol, isopropylalcohol or 1-methoxy-2-propanol; a ketone-based solvent such as acetone, methylethylketone, methylpropylketone, methylisobutylketone, cyclohexanone, isophorone or dimethylketone; an ester-based solvent such as 3-methyl-methoxypropionate, n-butyl acetate, ethyl acetate, propylene glycol monomethyletheracetate or propylene glycol ethyletheracetate; a glycol-based solvent such as ethylene glycol, diethylene glycol, triethylene glycol or propylene glycol; a glycol ether-based solvent such as ethylene glycol monomethylether, ethylene glycol monoethylether, ethylene glycol monobutylether, diethylene glycol monoethylether, diethylene glycol monobutylether, diethylene glycol monomethylether, propylene glycol monomethylether or 3-methoxy-3-methyl-1-butanol; an amido-based solvent such as formamido, N-methylformamido, dimethylformamido, dimethylacetamido or N-methyl-2-pyrrolidone; a hydrocarbon-based solvent such as toluene, xylene or solvent naphtha; a halogen-based solvent such as ethylene chloride or chlorobenzene, or the like may be exemplified.

Thereamong, specifically, isopropylalcohol, ethanol, 1-methoxy-2-propanol, dimethylketone, methylethylketone, methylisobutylketone, toluene, propylene glycol monomethyletheracetate, n-butyl acetate or the like are more preferable. These organic solvents may be used alone, or two or more types may be used in combination.

The concentration of the organic solvent in the adhesive composition is not specifically limited, but is preferably 10 mass% or more and 90 mass% or less. By the concentration of organic solvent being greater than or equal to 10 mass%, the adhesive composition can be made to a viscosity which is specifically suitable for handling. However, if the concentration of the organic solvent is in excess of 90 mass%, the amount of the organic solvent to be removed during drying increases, thus, there is a risk that a production cost increases. Thus, the concentration of the organic solvent in the adhesive composition is preferably 90 mass% or less.

However, when an organic solvent is included in the adhesive, the cross-linking agent or the like added to the adhesive composition, it is preferable that the organic solvent derived from such an adhesive agent or the like is also calculated and the above-described range is satisfied when calculating the concentration of the organic solvent in the adhesive composition.

### (6) Production of the adhesive composition

The adhesive composition according to the present invention can be produced by weighing and mixing the above-described components. The above-described components may be mixed at once, or a part of the components may be mixed.

For example, the composite tungsten oxide particles and the dispersing agent can be mixed with the organic solvent to form a primary dispersing liquid. The dispersion method of the composite tungsten oxide to the primary dispersing liquid is not specifically limited as long as it is a method which can uniformly disperse the fine particles with the primary dispersing liquid without aggregation. Examples of the dispersion method include a dispersion treatment method using a device such as a bead mill, a ball mill, a sand mill, a paint shaker, an ultrasonic homogenizer, or the like. Thereamong, pulverizing and dispersing with a media stirring mill such as a bead mill, a ball mill, a sand mill, or a paint shaker in which media (beads, balls, or Ottawa sand) is used is preferable because the time required to make the desired dispersion particle size is short. By the pulverization and the dispersion treatment using these media stirring mills the formation of the fine particles is promoted due to the collisions between the composite tungsten oxide particles and the collision of the media against the particles simultaneously with the dispersion of the composite tungsten oxide particles into the dispersing liquid, and the composite tungsten oxide particles can be made finer and dispersed (that is, the composite tungsten oxide particles are subjected to a pulverization and dispersion treatment).

Moreover, the degree of the pulverization and dispersion of the composite tungsten oxide particles in the primary dispersing liquid can determine the particle size of the particles in the particle dispersion liquid at a cumulative value of 50% (median value) in a particle size distribution obtained by a laser diffraction/scattering method as the dispersion particle size.

The scattering of light by the composite tungsten oxide particles can be suppressed, the transparency of the adhesive layer at the visible region can be efficiently retained, and the visibility can be ensured in the adhesive layer obtained when the dispersion particle size of the composite tungsten oxide particles in the primary dispersing liquid is 200 nm or less. Moreover, it is desirable that the dispersion particle size is 100 nm or less, even more preferably 80 nm or less.

Next, a secondary dispersing liquid can be formed by adding and mixing the metal coupling agent having an amino group to the obtained primary dispersing liquid. Furthermore, the adhesive composition which is a tertiary dispersing liquid can be formed by adding and mixing the adhesive, and other additive components to the secondary dispersing liquid. The means for obtaining the secondary dispersing liquid and the tertiary dispersing liquid from the primary dispersing liquid are not specifically limited, and a ball mill, a paint shaker or the like may be used. Moreover, the composite tungsten oxide particles are not pulverized in the process for obtaining the secondary dispersing liquid and the tertiary dispersing liquid from the primary dispersing liquid, thus, the dispersion particle size of the composite tungsten oxide particles in the primary dispersing liquid may be considered to be the dispersion particle size of the composite tungsten oxide particles in the adhesive composition.

Moreover, in the dispersion of the composite tungsten oxide particles, when a value of the XRD peak intensity of a (220) plane of a standard silicon powder sample (640c, produced by NIST) is set to 1, the dispersion process conditions are set so that the XRD peak top intensity ratio value of the composite tungsten oxide particles can be secured to 0.13 or more The adhesive composition exhibits excellent optical properties by this setting.

There are cases when the dispersion particle size of the composite tungsten oxide particles included in the adhesive composition is different than the average particle size of the composite tungsten oxide particles included in the adhesive layer obtained from the adhesive composition. This is because, the composite tungsten oxide particles which were aggregated in the adhesive composition are loosened when the adhesive layer is processed.

As described above, according to the adhesive composition according to the present invention, the generation of opaqueness or gelation can be suppressed over a few hours after being produced. Thus, since the workability is excellent when using the adhesive composition to form the adhesive layer, and the conventional discarding of the adhesive agent composition due to opaqueness or gelation can be suppressed, the economic efficiency can increase.

Furthermore, by using the adhesive composition according to the present invention, it is possible to suppress the haze of the adhesive layer which will be described later.

### (B) Adhesive Layer

The adhesive layer according to the present invention is obtained by forming the above-described adhesive composition, and applying or forming on a predetermined transparent substrate, and then, removing the solvent by drying. However, there are cases when solvent remains in the obtained adhesive layer.

Moreover, in the adhesive layer according to the present invention, it is preferable that the transparency and the near-infrared absorption functions are high. The transparency and the near-infrared absorption functions of the adhesive layer, in other words, the heat shielding properties can be respectively evaluated by the visible light transmittance and the solar transmittance.

The degree of transparency and the near-infrared absorption performance required in the adhesive layer according to the present invention are not specifically limited, and it is preferable to set the properties in accordance with the application or the like of the adhesive layer.

Specifically, for example, when used for a window material or the like, the visible light transmittance is preferably high from the viewpoint of maintaining the transmission of light to human eyes, and the solar transmittance is preferably low from the viewpoint of reducing the entry of heat due to the solar light.

More specifically, for example, when the near-infrared absorption film including the adhesive layer according to the present invention is used as a building material or a window material of an automobile, the adhesive layer preferably has a visible light transmittance of 70% or more, and a solar transmittance of 60% or less. Specifically, a visible light transmittance of 70% or more, and a solar transmittance of 50% or less is more preferable, a visible light transmittance of 70% or more, and a solar transmittance of 40% or less is specifically preferable.

However, the visible light transmittance and the solar transmittance are specified in JIS R 3106.

The visible light transmittance and the solar transmittance can be set to the desired range, for example, by adjusting the addition amount such as the composite tungsten oxide particles included in the adhesive layer according to the present invention.

The adhesive layer according to the present invention is preferably arranged, for example, on one surface of a transparent substrate or the like and used for various applications.

The transparent substrate is not specifically limited, but, examples thereof include a plastic substrate made of a plastic material such as a polyester-based resin such as polyethylene terephthalate (PET); an acrylic-based resin such as polymethyl methacrylate (PMMA); polycarbonate resin; triacetylcellulose (TAC); polysulfone; polyarylate; polyimido; polyvinyl chloride; polyvinyl acetate; olefin-based resin such as polyethylene, polypropylene, ethylene-propylene copolymer, cycloolefin-based polymer (for example, product name "ARTON" (produced by JSR Corporation), product name "ZEONOR" (produced by ZEON Corporation)), or the like. However, an embodiment of the plastic substrate is not specifically limited, but, for example, a plastic film or a plastic sheet may be exemplified. However, the above-described plastic material may be used alone, or two or more types may be used in combination.

Further, a glass substrate made of a glass material, in other words, a glass plate or the like may also be used as the transparent substrate. However, from the viewpoint of handling performance or the like, the plastic substrate made of a plastic material is preferably used as the transparent substrate.

The thickness of the transparent substrate can be arbitrarily selected in accordance with the material of the transparent substrate, and is not specifically limited, but for example, when the transparent substrate is a plastic substrate, the thickness is preferably 3 µm or more. This is because when the transparent substrate is a plastic substrate, a sufficient strength can be obtained by setting the thickness to 3 µm or more, and when the near-infrared absorption film including the plastic substrate and the adhesive layer is adhered to a window or the like, the plastic substrate or the like can be suppressed from being broken.

When the transparent substrate is a plastic substrate, the upper limit value of the thickness is not specifically limited, but in consideration of the handling performance and the like, the thickness is preferably 100 µm or less.

Further, when the transparent substrate is a glass substrate, the thickness of the glass substrate is preferably 1 mm or more. This is because a sufficient strength can be obtained by setting the thickness of the glass substrate to 1 mm or more, when the near-infrared absorption film including the glass substrate and the adhesive layer is adhered to a window or the like, the glass substrate or the like can be suppressed from being broken.

The upper limit value of the thickness when the transparent substrate is the glass substrate is not specifically limited, but for example, is preferably 5 mm or less. This is because if the thickness of the glass substrate is in excess of 5 mm, there are the problems that weight increases, and the handling performance decreases.

However, the transparent substrate may be formed from a single layer or a plurality of layers, and when the transparent substrate is made of a plurality of layers, each of the layers is preferably in the above-described range.

Further, the transparent substrate surface may be subjected to a surface treatment such as a physical treatment such as corona discharge processing or plasma processing or a chemical treatment such as undercoating.

The transparent substrate is preferably a substrate having a high transparency. For example, the total light transmittance at a visible light wavelength range of the transparent substrate evaluated based on JIS K 7361-1 is preferably 85% or more, more preferably 88% or more, and even more preferably 90% or more.

Further, the haze of the transparent substrate evaluated based on JIS K 7136 is preferably, for example, 1.5% or less, more preferably 1.0% or less.

The adhesive layer according to the present invention is described above, but the adhesive layer according to the present invention can have a light absorbing capability in the near-infrared region, a low haze and an excellent productivity.

### [2] Near-infrared absorption film

Next, an example of an embodiment of the near-infrared absorption film according to the present invention will be described.

The near-infrared absorption film according to the present invention may have the abovementioned adhesive layer.

The near-infrared absorption film according to the present invention may have the transparent film and theabove-described adhesive layer.

The transparent film is not specifically limited, but theabove-described transparent substrate can be suitably used. The transparent film may include one surface and another surface which is arranged on an opposite side of the one surface.

Moreover, for example, the abovementioned adhesive layer may be provided at the one surface side of the transparent film.

Therefore, by forming the near-infrared shielding film in which the adhesive layer is arranged at the one surface side of the transparent film, when the near-infrared absorption film is adhered to a window or the like, the composite tungsten oxide particles included in the adhesive layer are not exposed to air. Thus, even when left under a severe environment of high temperature and high humidity for a long period of time, the discoloration of the near-infrared absorption film due to the oxidization of the composite tungsten oxide particles can be suppressed.

Further, the adhesive layer according to the present invention is comprised of the composite tungsten oxide particles as particles having infrared absorption properties, and the haze is also low, and thus, shows excellent characteristics as an infrared cut filter.

The near-infrared absorption film according to the present invention may have an optional layer other than the above-described transparent film and the adhesive layer. The near-infrared absorption film according to the present invention may, for example, have a hard coat layer.

In this case, the near-infrared absorption film may have a transparent film having one surface and another surface arranged on an opposite side of the one surface, an adhesive layer and a hard coat layer. Moreover, the adhesive layer may be provided at the one surface side of the transparent film, and the hard coat layer may be provided at the other surface side of the transparent film.

Therefore, damage to an exposed surface of the near-infrared shielding film can be suppressed by providing the hard coat layer to the near-infrared shielding film.

The hard coat layer is not specifically limited, and, for example, may be formed by an ultraviolet curing resin or the like, and coating the ultraviolet curing resin on another surface side of the transparent film and irradiating an ultraviolet light to perform curing.

The hard coat layer also preferably has a high total light transmittance, and for example, the total light transmittance at a visible light wavelength range of the hard coat layer evaluated based on JIS K 7361-1 is preferably 85% or more, more preferably 88% or more, and even more preferably 90% or more.

However, it is preferable that the hard coat layer does not contain the composite tungsten oxide particles. This is because, as described above, the composite tungsten oxide particles included in the hard coat layer may be arranged in a state in which they are exposed to air, and discoloration may occur due to oxidation.

### [3] Laminated structure

Next, an example of an embodiment of the laminated structure according to the present invention will be described.

The laminated structure according to the present invention may have a plurality of transparent films and the abovementioned adhesive layer. Moreover, the plurality of transparent films and the adhesive layer may be arranged to be in parallel with each other, and the adhesive layer may be arranged between the plurality of transparent films.

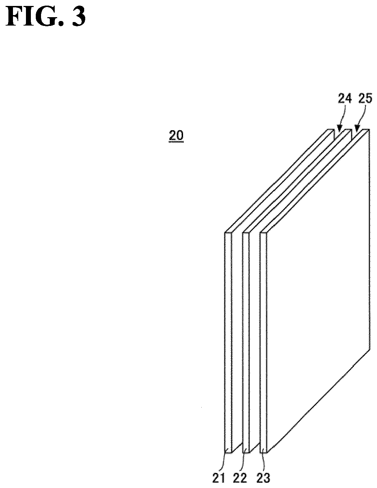

The laminated structure according to the present invention is described using Fig. 3. Fig. 3 is a perspective view illustrating a laminated structure 20 according to the present invention.

As illustrated in Fig. 3, a laminated structure 20 may have a plurality of transparent films 21, 22 and 23. However, an example in which the three transparent films 21 to 23 are used is illustrated in Fig. 3, but it is not limited to this embodiment, and two, or four or more transparent films may be used.

However, the transparent film is not specifically limited, but the transparent substrate described regarding the adhesive layer may be used. Further, as illustrated in Fig. 3, the plurality of transparent films 21 to 23 may be arranged so that their main surfaces are parallel with each other.

The adhesive layer, not shown in the drawing, can also be arranged such as to be parallel with the plurality of transparent films 21 to 23. Moreover, the adhesive layer, not shown in the drawing, can be arranged between transparent films 24 and 25.

However, the number of adhesive layers included in the laminated structure is not specifically limited, and can be provided in accordance with the number of spaces between the plurality of transparent films, in other words, the number of transparent films. For example, the case of the laminated structure 20 illustrated in Fig. 3 has spaces between the transparent films 24 and 25. Thus, an adhesive layer can be provided between both spaces between the transparent films 24 and 25. Further, the adhesive layer can be provided in only one of the spaces between transparent film 24 or transparent film 25. That is, the adhesive layer the adhesive layer may be arranged at one or more selected spaces between the transparent films, among the spaces between the transparent films.

When there is a space in which the adhesive layer is not arranged, among the spaces between the transparent films included in the laminated structure, the structure of the space is not specifically limited. For example, an ultraviolet light absorption film, an adhesive layer having a different structure, or the like may be provided.

According to the laminated structure 20 illustrated in Fig. 3, since the adhesive layer is arranged between the transparent films, the composite tungsten oxide particles included in the adhesive layer are not exposed to air. Thus, the discoloration of the near-infrared absorption film due to the oxidation of the composite tungsten oxide can be suppressed even when left under a severe environment of high temperature and high humidity for a long period of time.

### [4] Laminated body

Next, an example of an embodiment of the laminated body according to the present invention will be described.

The laminated body according to the present invention includes the above-described adhesive layer, a glass plate positioned on the one surface side of the adhesive layer, and a transparent film including the hard coat layer arranged on an opposite side of the one surface of the adhesive layer.

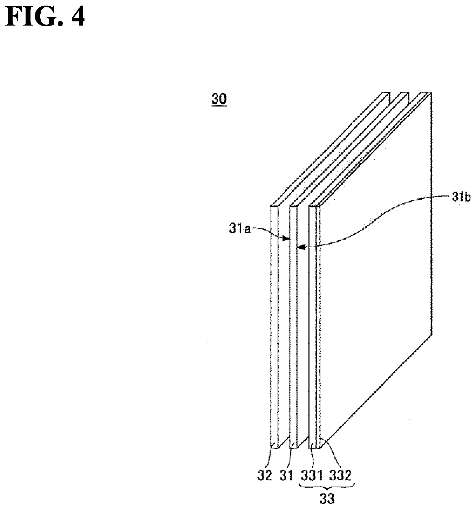

The laminated body according to the present invention will be described using Fig. 4. Fig. 4 illustrates a perspective view of a laminated body 30 according to the present invention. However, Fig. 4 illustrates each layer in order to facilitate the understanding of the structure of the layers of the laminated body 30. Actually, the respective layers forming the laminated body 30 are in a laminated and adhered state.

As illustrated in Fig. 4, the laminated body 30 can have an adhesive layer 31.

Moreover, a glass plate 32 may be arranged at one surface 31a of the adhesive layer 31. Further, a transparent film 33 with a hard coat layer may be arranged on an opposite side (another surface side) 31b of the one surface 31a of the adhesive layer 31.

However, the transparent film 33 with a hard coat layer may have a structure in which a hard coat layer 332 is arranged at a surface of a transparent film 331. Among the surface of the transparent film 331, the surface on which the hard coat layer 332 is arranged is not specifically limited, but as illustrated in Fig. 4, the hard coat layer 332 is preferably arranged on the opposite side of the surface facing the adhesive layer 31. This is because the hard coat layer 332 can suppress damage to the surface of the transparent film 331, thus, the hard coat layer 332 is preferably arranged on a surface of the exposed side of the transparent film 331.

However, the transparent film is not specifically limited, but the above-described transparent substrate described with regards to the adhesive layer may be used.

The laminated body illustrated in Fig. 4 may be formed by, for example, forming a near-infrared shielding film by the adhesive layer 31 and the transparent film 33 with the hard coat layer, and then adhering the near-infrared shielding film on a window glass or the like.

The laminated body according to the present invention preferably has a visible light transmittance of 65% or more, and a solar transmittance of 60% or less. Specifically, the laminated body according to the present invention more preferably has a visible light transmittance of 70% or more, and a solar transmittance of 50% or less, and even more preferably has a visible light transmittance of 70% or more, and a solar transmittance of 40% or less.

Further, the haze of the laminated body according to the present invention is preferably 1.5% or less, more preferably 1.0% or less.

However, the visible light transmittance and the solar transmittance are specified in JIS R 3106. Further, the haze may be measured and evaluated based on JIS K7136.

The laminated body 30 illustrated in Fig. 4 has a structure in which the adhesive layer is arranged between the transparent film with the hard coat layer and the glass plate, thus, the composite tungsten oxide particles included in the adhesive layer are not exposed to air. Thus, even when left under in severe environment having a high temperature and high humidity for a long period of time, the discoloration of the adhesive layer due to the oxidization of the composite tungsten oxide can be suppressed.

The weather resistance of the laminated body can be evaluated, by performing a wet heat test on the laminated body, and evaluating the variation of the total light transmittance in the visible light wavelength range before and after the wet heat test.

However, the wet heat test refers to a test which maintains the laminated body under high temperature and high humidity, and for example, the test may be performed by maintaining under an environment of a temperature of 85°C and relative humidity of 90% for seven days.

The laminated body according to the present invention preferably has 1.0% or less absolute value of the difference in the total light transmittance in the visible light wavelength range before and after the wet heat test. This is because when the absolute value of the difference in the total light transmittance in the visible light wavelength range before and after the wet heat test is 1.0% or less, it means that the discoloration of the adhesive layer due to the oxidation of the composite tungsten oxide can be suppressed, and the weather resistance is excellent.

However, the total light transmittance in the visible light wavelength range can be measured as specified in JIS K 7361-1.

### Examples

The present invention will be specifically described below with reference to examples. However, the present invention is not limited to the following examples.

First, the evaluation items in the examples will be described in the order of (1) XRD peak top intensity ratio value, (2) Average particle size, (3) Average particle size in the adhesive layer, (4) Evaluation of the laminated body having the near-infrared absorption film, (5) Total light transmittance and haze, (6) Visible light transmittance and solar transmittance, (7) Wet heat test, and (8) Stability of the adhesive composition.

### (1) XRD peak top intensity ratio value

An X-ray diffraction pattern was measured by a powder X-ray diffraction method (θ-2θ method) using a powder X-ray diffractometer (X'Pert-PRO / MPD produced by Spectris Co., Ltd. PANalytical). In order to ensure an objective quantitative property, each time the X-ray diffraction pattern of the composite tungsten oxide particles was measured, the X-ray diffraction pattern of a silicon powder standard sample was measured, and the peak intensity ratio was calculated each time.

### (2) Average particle size

The average particle size of the composite tungsten oxide particles in the particle dispersion liquid was measured by a microtrack particle size analyzer (produced by NIKKISO CO., LTD., model type: UPA-UT).

### (3) Average particle size in the adhesive layer

The average particle size of the composite tungsten oxide particles dispersed in the adhesive layer was measured by observing a transmission electron microscope image of the cross-section of the adhesive layer. The transmission electron microscope image was observed using a transmission electron microscope (HF-2200, produced by Hitachi High-Technologies Corporation). The transmission electron microscopic image was processed using an image processing device to measure the particle size of 100 composite tungsten oxide particles and the average value thereof was taken as the average particle size.

### (4) Evaluation of the laminated body having the near-infrared absorption film

The visible light transmittance, the solar radiation absorption rate and the haze, which will be described later, were evaluated for the laminated body formed by adhering the near-infrared absorption film to the glass plate having a thickness of 3 mm. Further, the laminated body was subjected to the wet heat test, and the variation of the total light transmittance (hereinafter, simply referred to as the "total light transmittance") in the visible light wavelength range before and after the wet heat test was evaluated.

The near-infrared absorption film has a structure in which the adhesive layer and the transparent film with the hard coat layer were laminated. Thus, the laminated body formed by attaching the near-infrared absorption film to the glass plate has the same structure as the laminated body illustrated in Fig. 4.

That is, as illustrated in Fig. 4, the laminated body 30 has a structure in which a glass plate 32 having a thickness of 3 mm, an adhesive layer 31, and a transparent film 33 with a hard coat layer were laminated. However, the transparent film 33 with a hard coat layer has a structure in which the hard coat layer 332 is arranged on an opposite side of the surface facing the adhesive layer 31 of the transparent film 331.

### (5) Total light transmittance and haze

The total light transmittance and the haze of the laminated body having the near-infrared absorption film were measured using a haze and transmittance meter (produced by MURAKAMI COLOR RESEARCH LABORATORY CO., Ltd., model: HM-150) based on JIS K 7361-1 and JIS K 7136.

When the haze of the laminated body having the near-infrared absorption film is 1.5% or less, it can be said that the laminated body has sufficient properties.

However, the total light transmittance was measured before and after the wet heat test.

### (6) Visible light transmittance and solar transmittance

The visible light transmittance and the solar transmittance of the laminated body having the near-infrared absorption film were calculated from the transmittance of wavelengths of 200 nm to 2600 nm measured using a spectrophotometer (produced by Hitachi, Ltd., model: U-4100) based on JIS R 3106.

### (7) Wet heat test

The weather resistance of the laminated body having the near-infrared absorption film was verified by measuring a total light transmittance of the laminated body before and after the implementation of the wet heat test, and obtaining the difference therebetween. That is, it was determined that the wet heat resistance was good by the difference of the total light transmittance of the laminated body including the near-infrared absorption film before and after the implementation of the wet heat test being small. Specifically, when the absolute value of the difference in the total light transmittance of the laminated body having the near-infrared absorption film before and after the wet heat test is 1.0% or less, it can be said that the weather resistance is sufficient.

The wet heat test was performed by exposing the laminated body having the near-infrared absorption film under an environment of a temperature of 85°C and a relative humidity of 90% for seven days.

### (8) Stability of the adhesive composition

The stability of the adhesive composition was determined by visually evaluating the adhesive agent composition which had been left standing for 12 hours after being produced. When gelation and opaqueness of the adhesive agent composition, and aggregation and precipitation of the composite tungsten oxide particles were not observed, it was determined that the stability was good.

### [Example 1]

0.216 kg of Cs₂CO₃ was dissolved in 0.330 kg of water, which was then added to 1.000 kg of H₂WO₄ and sufficiently stirred, and dried to obtain a mixed powder of Cs_{0.33}WO₃ as the target composition.

Next, the above-described high-frequency plasma reaction device illustrated in Fig. 1 was used, the inside of the reaction system was evacuated to about 0.1 Pa (about 0.001 Torr) by a vacuum evacuation device, and then the inside of the reaction system was completely replaced with argon gas to obtain a flow system of 1 atm. Then, the argon gas was introduced as a plasma gas into the reaction vessel at a flow rate of 30 L / min, and the argon gas and the helium gas were introduced spirally as a sheath gas from a sheath gas feed port at respective flow rates of 55 L/min and 5 L/min. Moreover, a high-frequency power was applied to a water-cooled copper coil to generate a high-frequency plasma. At this time, in order to generate thermal plasma having a high temperature part of 10000 to 15000 K, the high-frequency power was set to 40 KW.

After generating the high-frequency plasma in this manner, the mixed powder was fed into the thermal plasma at a rate of 50 g / min while feeding the argon gas as a carrier gas at a flow rate of 9 L / min from the gas feed device 11.

As a result, the mixed powder was instantaneously evaporated in the thermal plasma, and rapidly solidified in the process of reaching the plasma tail flame part, which resulted in the formation of the fine particles. The generated fine particles were deposited on a recovery filter.

The deposited fine particles were recovered and the composite tungsten oxide particles (hereinafter, referred to as fine particle a) according to Example 1 were obtained. An X-ray diffraction pattern was measured by a powder X-ray diffraction method (θ-2θ method) using a powder X-ray diffractometer (X'Pert-PRO / MPD produced by Spectris Co., Ltd. PANalytical).

The X-ray diffraction pattern of the fine particle a is illustrated in Fig. 2. As a result of phase identification, the fine particle a was identified as a hexagonal Cs_{0.33}WO₃ single phase. Furthermore, when crystal structure analysis by the Rietveld analysis method was performed using the X-ray diffraction pattern, the crystallite size of the fine particle a was 23.5 nm. Furthermore, the value of the peak top intensity of the X-ray diffraction pattern of the fine particle a was 4200 counts.

The composition of the fine particle a was examined by ICP emission analysis. As a result, the Cs concentration was 13.6 mass%, the W concentration was 65.3 mass%, and the molar ratio of Cs/W was 0.29. it was confirmed that the remaining part other than Cs and W was oxygen, and no other impurity elements contained in an amount of 1 mass% or more were present.

When a BET specific surface area of the fine particle a was measured using a BET specific surface area measuring device (HM model 1208 produced by Mountech Corporation), the BET specific surface area was 60.0 m²/g. However, nitrogen gas having a purity of 99.9% was used for the measurement of the BET specific surface area.

20 parts by mass of the fine particle a, 7 parts by mass of the dispersing agent (amine value: 13 mg KOH/g) (hereinafter, referred to as the dispersing agent a) having a group comprised of an amine as the functional group and a polyacrylic main chain, and 73 parts by mass of toluene which is an organic solvent were weighed. These raw materials were introduced into a paint into which 0.3 mmcp ZrO₂ beads were introduced, and a pulverization and dispersion treatment was performed for 1 hour to obtain a particle dispersing liquid (hereinafter, referred to as the particle dispersion liquid a) of the fine particle a.

The above-described production conditions are described in Table 5. Further, the production conditions of Examples 2 to 21 and Comparative example 1 to 8 are also described in Table 5 in the same manner.

The value of the peak top intensity of the X-ray diffraction pattern of the composite tungsten oxide particles included in the particle dispersion liquid a, that is, the composite tungsten oxide particles after the pulverization and the dispersion treatment was 3200 counts and the peak position was 2θ = 27.8°.

On the other hand, the standard silicon powder sample (640c, produced by NIST) was prepared and the peak intensity value of the silicon powder standard sample based on the (220) plane was measured and it was found to be 19800 counts.

Therefore, when the peak intensity value of the standard sample was set to 1, it was determined that the XRD peak intensity ratio value of the composite tungsten oxide particles of the particle dispersion liquid a of Example 1 was 0.16.

Further, the crystallite size of the composite tungsten oxide particles of Example 1 after the pulverization and the dispersion treatment was 23.5 nm.

Furthermore, the dispersion particle size of the particle dispersion liquid a of Example 1 was measured to be 80 nm using a particle size measuring device based on a dynamic light scattering method. However, as a setting of the particle size measurement, the particle refractive index was set to 1.81 and the particle shape was set as nonspherical. Further, the background was measured using toluene and the solvent refractive index was set to 1.50.

3-aminopropyltrimethoxysilane (CAS No. 13822-56-5, hereinafter, referred to as silane coupling agent a) which is the metal coupling agent having an amino group was added and mixed in the particle dispersion liquid a. In this case, the silane coupling agent a was added and mixed so that the mass ratio of the silane coupling agent a with respect to the composite tungsten oxide in the obtained dispersing liquid became [composite tungsten oxide]/[silane coupling agent a] = 100/10. A dispersing liquid (hereinafter, referred to as the particle dispersion liquid a') comprised of the composite tungsten oxide particles, the dispersing agent, the metal coupling agent having an amino group and the organic solvent was obtained thereby.

Next, 10 parts by mass of the particle dispersion liquid a' and 170 parts by mass of the adhesive (produced by Soken Chemical & Engineering Co., Ltd., product name "SK-Dyne 1811L", resin solid component 23%), were mixed with 0.6 parts by mass of the isocyanate-based cross-linking agent (produced by Soken Chemical & Engineering Co., Ltd., product name "TD-75", active ingredient 75%) and the adhesive composition (hereinafter, referred to as the adhesive composition a) was obtained.

However, the adhesive used is comprised of the acrylic-based polymer.

The measurement results are described in Table 1.

An ultraviolet curing resin (produced by TOAGOSEI CO., LTD., UV3701) was coated on one surface of the transparent film (a PET film with a thickness of 50 µm, produced by TEIJIN FILM SOLUTIONS LIMITED, product name TETRON (registered trademark) HPE). Next, the coated layer was cured by irradiating ultraviolet light with an integrated light quantity of 200 mJ/cm² to form a hard coat layer. The adhesive composition a was coated on another surface of the transparent film and dried in order to produce an adhesive layer and obtain the near-infrared absorption film of Example 1.

However, the total light transmittance at a visible light wavelength range of the used transparent film which was evaluated based on JIS K 7361-1 was 90.2%. Further, the haze which was evaluated based on JIS K 7136 was 0.9%.

The adhesive layer of the near-infrared absorption film of Example 1 was adhered to the glass plate having a thickness of 3 mm to obtain the laminated body having the near-infrared absorption film.

The average particle size of the composite tungsten oxide particles dispersed in the adhesive layer of Example 1 was calculated by an image processing device using the transmission electron microscope image to be 23 nm, which was almost the same value as the above-described crystallite size of 23.5 nm.

When the visible light transmittance, the solar radiation absorption rate and the haze were measured and calculated by the previously described method with regards to the laminated body of Example 1, the visible light transmittance was 71.1%, the solar transmittance was 31.8% and the haze was 0.8%.

The wet heat test was performed to the laminated body of Example 1. The total light transmittance before the test was 70.4%, and the total light transmittance after the test was 70.6%. Therefore, the variation of the total light transmittance before and after the test was +0.2%.

In addition, when the adhesive composition a which had been left standing for 12 hours after being produced was evaluated visually, no gelation and opaqueness were observed, and no aggregation and precipitation of the composite tungsten oxide particles could be observed, thus, it was determined that the stability was good.

The results are illustrated in Table 3.

### [Examples 2 to 6]

The composite tungsten oxide particles and the composite tungsten oxide particle dispersing liquids of Examples 2 to 6 were produced by performing the same operation as in Example 1 with the exception that the carrier gas flow amount, the plasma gas flow amount, the sheath gas flow amount and the raw material feed rate were changed. The changed carrier gas flow amount conditions, the raw material feed rate conditions and the other conditions are described in Table 2. The evaluations of the composite tungsten oxide particles and the composite tungsten oxide particle dispersing liquid of Examples 2 to 6 were performed in the same manner as Example 1. The evaluation results are illustrated in Table 1.

Further, the near-infrared absorption films of Examples 2 to 6 were obtained and evaluated in the same manner as the near-infrared absorption film of Example 1 with the exception that the composite tungsten oxide particle dispersing liquids of Examples 2 to 6 were used.

The measurement results are illustrated in Tables 1 and 3.

### [Example 7]

The mixed powder of Cs₂CO₃ and H₂WO₄ described in Example 1 was changed to the composite tungsten oxide represented by Cs_{0.33}WO₃ fired at 800°C under a mixed gas atmosphere of nitrogen gas and hydrogen gas, and was used as the raw material to be charged into the high-frequency plasma reaction device. Other than the above, the composite tungsten oxide particles (hereinafter, referred to as fine particle g) of Example 7 were produced by the same method as Example 1.

Further, the dispersing liquid (hereinafter, referred to as the particle dispersion liquid g) of the fine particle g was obtained in the same manner as Example 1 with the exception that the fine particle g was used in place of the fine particle a.

The value of the peak top intensity of the X-ray diffraction pattern of composite tungsten oxide particles included in the particle dispersion liquid g, that is, the composite tungsten oxide particles after the pulverization and the dispersion treatment was 3800 counts and the peak position was 2θ = 27.8°.

On the other hand, the standard silicon powder sample (640c, produced by NIST) was prepared and the peak intensity value of the silicon powder standard sample based on the (220) plane was measured to be 19800 counts.

Therefore, when the peak intensity value of the standard sample was set to 1, it was determined that the XRD peak intensity ratio value of the composite tungsten oxide particles of the particle dispersion liquid g of Example 7 was 0.19.

Further, the crystallite size of the composite tungsten oxide particles of Example 7 after the pulverization and the dispersion treatment was 24.3 nm.

The dispersing liquid (hereinafter, referred to as the particle dispersion liquid g') comprised of the composite tungsten oxide particles, the dispersing agent, the metal coupling agent having an amino group and the organic solvent was obtained in the same manner as Example 1 with the exception that the particle dispersion liquid g was used in place of the particle dispersion liquid a.

Next, the adhesive composition (hereinafter, referred to as the adhesive composition g) was obtained in the same manner as Example 1 with the exception that the particle dispersion liquid g' was used in place of the particle dispersion liquid a'.

The adhesive layer of Example 7, the near-infrared absorption film having the adhesive layer of Example 7 and the laminated body having the near-infrared absorption film of Example 7 were obtained in the same manner as Example 1 with the exception that the adhesive composition g was used.

The fine particle g was evaluated in the same manner as Example 1 except that the fine particle g was used in place of the fine particle a. Further, the evaluations were performed to the particle dispersion liquid g, the particle dispersion liquid g', the adhesive composition g, the adhesive layer thereof, the near-infrared absorption film and the laminated body in the same manner as Examples 1 to 6.

The measurement results are illustrated in Tables 1 and 3.

### [Example 8]

The fine particle h was obtained by performing the same operation as in Example 1 except that the carrier gas flow amount and the raw material feed rate described in Example 1 were changed.

Moreover, the dispersing liquid (hereinafter, referred to as the particle dispersion liquid h) of the fine particle h was obtained in the same manner as Example 1 with the exception that the fine particle h was used in place of the fine particle a.

The value of the peak top intensity of the X-ray diffraction pattern of composite tungsten oxide particles included in the particle dispersion liquid h, that is, the composite tungsten oxide particles after the pulverization and the dispersion treatment was 4200 counts and the peak position was 2θ = 27.8°.

On the other hand, the standard silicon powder sample (640c, produced by NIST) was prepared and the peak intensity value of the silicon powder standard sample based on the (220) plane was measured to be 19800 counts.

Therefore, when the peak intensity value of the standard sample was set to 1, it was found that the XRD peak intensity ratio value of the composite tungsten oxide particles of the particle dispersion liquid h according to Example 8 was 0.21.

Further, the crystallite size of the composite tungsten oxide particles after the pulverization and the dispersion treatment according to Example 8 was 19.3 nm.

The dispersing liquid (hereinafter, referred to as the particle dispersion liquid h') comprised of the composite tungsten oxide particles, the dispersing agent, the metal coupling agent having an amino group and the organic solvent was obtained in the same manner as Example 1 with the exception that the particle dispersion liquid h was used in place of the particle dispersion liquid a.

Next, the adhesive composition (hereinafter, referred to as the adhesive composition h) was obtained in the same manner as Example 1 with the exception that the particle dispersion liquid h' was used in place of the particle dispersion liquid a'.

The adhesive layer of Example 8, the near-infrared absorption film having the adhesive layer of Example 8, and the laminated body having the near-infrared absorption film of Example 8 were obtained in the same manner as Example 1 with the exception that the adhesive composition h was used.

The fine particle h was evaluated in the same manner as Example 1 except that the fine particle h was used in place of the fine particle a. Further, the evaluations were performed the particle dispersion liquid h, the particle dispersion liquid h', the adhesive composition h, the adhesive layer thereof, the near-infrared absorption film and the laminated body in the same manner as Example 1 to 7.

The measurement results are illustrated in Tables 1 and 3.

### [Example 9]

0.148 kg of Rb₂CO₃ was dissolved in 0.330 kg of water, which was then added to 1.000 kg of H₂WO₄ and sufficiently stirred, and dried to obtain a mixed powered of Rb_{0.32}WO₃ as the target composition. The fine particle i of Example 7 was obtained by a method in the same manner as Example 1 except that the mixed powder was used as the raw material to be charged into the high-frequency thermal plasma reactor.

Moreover, the dispersing liquid (hereinafter, referred to as the particle dispersion liquid i) of the fine particle i was obtained in the same manner as Example 1 with the exception that the fine particle i was used in place of the fine particle a.

The value of the peak top intensity of the X-ray diffraction pattern of composite tungsten oxide particles comprised of the particle dispersion liquid i, that is, the composite tungsten oxide particles after the pulverization and the dispersion treatment was 4100 counts and the peak position was 2θ = 27.8°.

On the other hand, the standard silicon powder sample (640c, produced by NIST) was prepared and the peak intensity value of the silicon powder standard sample based on the (220) plane was measured to be 19800 counts.

Therefore, when the peak intensity value of the standard sample was set to 1, it was found that the XRD peak intensity ratio value of the composite tungsten oxide particles of the particle dispersion liquid i according to Example 9 was 0.21.

Further, the crystallite size of the composite tungsten oxide particles after the pulverization and the dispersion treatment according to Example 9 was 24.4 nm.

The dispersing liquid (hereinafter, referred to as the particle dispersion liquid i') comprised of the composite tungsten oxide particles, the dispersing agent, the metal coupling agent having an amino group and the organic solvent was obtained in the same manner as Example 1 with the exception that the particle dispersion liquid i was used in place of the particle dispersion liquid a.

Next, with the exception that the particle dispersion liquid i' was used in place of the particle dispersion liquid a', the adhesive composition (hereinafter, referred to as the adhesive composition i) was obtained in same manner as Example 1.

With the exception that the adhesive composition i was used, the adhesive layer according to Example 9, the near-infrared absorption film having the adhesive layer according to Example 9, and the laminated body having the near-infrared absorption film according to Example 9 were obtained in the same manner as Example 1.

Evaluations were performed to the particle dispersion liquid i, the particle dispersion liquid i', the adhesive composition i, the adhesive layer thereof, the near-infrared absorption film and the laminated body in the same manner as Examples 1 to 8.

The measurement results are illustrated in Tables 1 and 3.

### [Example 10]

0.216 kg of Cs₂CO₃ was dissolved in 0.330 kg of water, which was then added to 1.000 kg of H₂WO₄ and sufficiently stirred, and dried to obtain a dried product. While feeding 5% H₂ gas with N₂ gas as a carrier, the dried product was heated, and fired at a temperature of 800°C for one hour. Then, furthermore, the composite tungsten oxide (hereinafter, referred to as fine particle j) of Example 10 was obtained by the solid-phase reaction method of firing at 800°C for 2 hours under an N₂ gas atmosphere.

20 parts by mass of fine particle j was mixed with 80 parts by mass of water to prepare approximately 3 kg of a slurry. However, a dispersing agent was not added to the slurry. The slurry was charged into the medium stirring mill together with beads, and the pulverization and the dispersion treatment were performed for four hours. However, a horizontal cylindrical annular type (produced by Ashizawa Co., Ltd.) was used as the medium stirring mill, in which the material of an inner wall of a vessel and a rotor (rotary stirring part) were made of zirconia. Further, beads made of YSZ (Yttria-Stabilized Zirconia: yttria-stabilized zirconia) having a diameter of 0.1 mm were used as the beads. The rotation speed of the rotor was set to 14 rpm / sec, and the flow rate of the slurry was set to 0.5 kg / min to perform the pulverization and dispersion treatment to obtain the composite tungsten oxide ultrafine particle dispersion liquid.

The dispersion particle size of the composite tungsten oxide particle dispersing liquid of Example 10 was measured to be 70 nm. Approximately 3 kg of the dispersing liquid was dried by an air dryer to obtain the fine particle j' of Example 10. However, a thermostatic oven SPH-201 type (produced by Espec Corporation) was used for the air dryer, the drying temperature was set to 70°C, and the drying time was set to 96 hours.

Further, with the exception that the fine particle j' was used in place of the fine particle a, the dispersing liquid (hereinafter, referred to as the particle dispersion liquid j) of the fine particle j' was obtained in the same manner as Example 1. However, the dispersion treatment time by the paint shaker was set to 5 minutes.

The X-ray diffraction pattern of the composite tungsten oxide particles comprised of the particle dispersion liquid j, that is, the composite tungsten oxide particles after the pulverization and the dispersion treatment was measured and the phase identification was performed, and as a result, the obtained fine particle were identified as having a hexagonal Cs_{0.33}WO₃ single phase, and the value of the peak top intensity was 3000 counts and the peak position was 2θ = 27.9°.

On the other hand, the standard silicon powder sample (640c, produced by NIST) was prepared, and the peak intensity value of the silicon powder standard sample based on the (220) plane was measured to be 19800 counts.

Therefore, when the peak intensity value of the standard sample was set to 1, it was found that the XRD peak intensity ratio value of the composite tungsten oxide particles of the particle dispersion liquid j according to Example 10 was 0.15.

Further, the crystallite size of the composite tungsten oxide particles after the pulverization and the dispersion treatment according to Example 10 was 17.2 nm.

With the exception that the particle dispersion liquid j was used in place of the particle dispersion liquid a, the dispersing liquid (hereinafter, referred to as the particle dispersion liquid j') comprised of the composite tungsten oxide particles, the dispersing agent, the metal coupling agent having an amino group and the organic solvent was obtained in the same manner as Example 1.

Next, with the exception that the particle dispersion liquid j' was used in place of the particle dispersion liquid a', the adhesive composition (hereinafter, referred to as the adhesive composition j) was obtained in the same manner as Example 1.

With the exception that the adhesive composition j was used, the adhesive layer according to Example 10, the near-infrared absorption film having the adhesive layer according to Example 10, and the laminated body having the near-infrared absorption film according to Example 10 were obtained in the same manner as Example 1.

Except for using the fine particle j in place of the fine particle a, the fine particle j was evaluated in the same manner as Example 1. Further, the evaluations were performed to the particle dispersion liquid j, the particle dispersion liquid j', the adhesive composition j, the adhesive layer thereof, the near-infrared absorption film and the laminated body in the same manner as Examples 1 to 9.

The measurement results are illustrated in Tables 1 and 3.

### [Example 11]

The dispersing liquid (hereinafter, referred to as the particle dispersion liquid k) of the fine particle j' was obtained in the same manner as Example 10 with the exception that the dispersing agent (amine value: 29 mg KOH/g) (hereinafter, referred to as the dispersing agent k) having a group comprised of an amine as the functional group and a polyurethane main chain was used in place of the dispersing agent having a group comprised of an amine as the functional group and a polyacrylic main chain.

The value of the peak top intensity of the X-ray diffraction pattern of the composite tungsten oxide particles comprised of the particle dispersion liquid k, that is, the composite tungsten oxide particles after the pulverization and the dispersion treatment was 4200 counts and the peak position was 2θ = 27.8°.

On the other hand, the standard silicon powder sample (640c, produced by NIST) was prepared, and the peak intensity value of the silicon powder standard sample based on the (220) plane was measured to be 19800 counts.

Therefore, when the peak intensity value of the standard sample was set to 1, it was found that the XRD peak intensity ratio value of the composite tungsten oxide particles of the particle dispersion liquid k according to Example 11 was 0.21.

Further, the crystallite size of the composite tungsten oxide particles after the pulverization and the dispersion treatment according to Example 11 was 23.7 nm.

With the exception that the particle dispersion liquid k was used in place of the particle dispersion liquid a, the dispersing liquid (hereinafter, referred to as the particle dispersion liquid k') comprised of the composite tungsten oxide particles, the dispersing agent, the metal coupling agent having an amino group and the organic solvent was obtained in the same manner as Example 1.

Next, with the exception that the particle dispersion liquid k' was used in place of the particle dispersion liquid a', the adhesive composition (hereinafter, referred to as the adhesive composition k) was obtained in the same manner as Example 1.

With the exception that the adhesive composition k was used, the adhesive layer according to Example 11, the near-infrared absorption film having the adhesive layer according to Example 11, and the laminated body having the near-infrared absorption film according to Example 11 were obtained in the same manner as Example 1.

The evaluations were performed to the particle dispersion liquid k, the particle dispersion liquid k', the adhesive composition k, the adhesive layer thereof, the near-infrared absorption film and the laminated body in the same manner as Examples 1 to 10.

The measurement results are illustrated in Tables 1 and 3.

### [Example 12]

The dispersing liquid (hereinafter, referred to as the particle dispersion liquid 1) of the fine particle j' was obtained in the same manner as Example 10 with the exception that the dispersing agent (amine value: 66 mg KOH/g) (hereinafter, referred to as the dispersing agent 1) having a group comprised of an amine as a functional group and a polystyrene-based main chain was used in place of the dispersing agent having a group comprised of an amine as the functional group and a polyacrylic main chain.

The value of the peak top intensity of the X-ray diffraction pattern of the composite tungsten oxide particles comprised of the particle dispersion liquid 1, that is, the composite tungsten oxide particles after the pulverization and the dispersion treatment was 4200 counts and the peak position was 2θ = 27.8°.

On the other hand, the standard silicon powder sample (640c, produced by NIST) was prepared, and the peak intensity value of the silicon powder standard sample based on the (220) plane was measured to be 19800 counts.

Therefore, when the peak intensity value of the standard sample was set to 1, it was found that the XRD peak intensity ratio value of the composite tungsten oxide particles of the particle dispersion liquid 1 according to Example 12 was 0.21.

Further, the crystallite size of the composite tungsten oxide particles after the pulverization and the dispersion treatment according to Example 12 was 19.2 nm.

3-aminopropyltriethoxysilane (CAS No. 919-30-2, hereinafter, referred to as silane coupling agent 1) which is a metal coupling agent having an amino group was added and mixed in the particle dispersion liquid 1. In this case, the silane coupling agent 1 was added and mixed so that the mass ratio of the silane coupling agent 1 with respect to the composite tungsten oxide in the obtained dispersing liquid [composite tungsten oxide]/[silane coupling agent 1] = 100/10. The dispersing liquid (hereinafter, referred to as the particle dispersion liquid 1') composed of the composite tungsten oxide particles, the dispersing agent, the metal coupling agent having an amino group and the organic solvent was obtained thereby.

Next, with the exception that the particle dispersion liquid 1' was used in place of the particle dispersion liquid a', the adhesive composition (hereinafter, referred to as the adhesive composition 1) was obtained in the same manner as Example 1.

With the exception that the adhesive composition 1 was used, the adhesive layer according to Example 12, the near-infrared absorption film having the adhesive layer according to Example 12, and the laminated body having the near-infrared absorption film according to Example 12 were obtained in the same manner as Example 1.

The evaluations were performed to the particle dispersion liquid 1, the particle dispersion liquid 1', the adhesive composition 1, the adhesive layer thereof, the near-infrared absorption film and the laminated body in the same manner as Example 1 to 11.

The measurement results are illustrated in Tables 1 and 3.

### [Example 13]

The dispersing liquid (hereinafter, referred to as the particle dispersion liquid m) of the fine particle j' was obtained in the same manner as Example 10 with the exception that the dispersing agent (acid value: 19 mg KOH/g) (hereinafter, referred to as the dispersing agent m) having the carboxyl group as the functional group and the polyacrylic main chain was used in place of the dispersing agent having a group comprised of an amine as the functional group and a polyacrylic main chain.

The value of the peak top intensity of the X-ray diffraction pattern of the composite tungsten oxide particles comprised of the particle dispersion liquid m, that is, the composite tungsten oxide particles after the pulverization and the dispersion treatment was 4200 counts and the peak position was 2θ = 27.8°.

On the other hand, the standard silicon powder sample (640c, produced by NIST) was prepared, and the peak intensity value of the silicon powder standard sample based on the (220) plane was measured to be 19800 counts.

Therefore, when the peak intensity value of the standard sample was set to 1, it was found that the XRD peak intensity ratio value of the composite tungsten oxide particles of the particle dispersion liquid m according to Example 13 was 0.21.

Further, the crystallite size of the composite tungsten oxide particles after the pulverization and the dispersion treatment according to Example 13 was 28.3 nm.

3-(2-aminoethylamino)propyldimethoxymethylsilane (CAS No. 3069-29-2, hereinafter, referred to as silane coupling agent m) which is a metal coupling agent having an amino group was added and mixed to the particle dispersion liquid m. In this case, the silane coupling agent m was added and mixed so that the mass ratio of the silane coupling agent m relative to the composite tungsten oxide in the obtained dispersing liquid [composite tungsten oxide]/[silane coupling agent m] = 100/10. The dispersing liquid (hereinafter, referred to as the particle dispersion liquid m') composed of the composite tungsten oxide particles, the dispersing agent, the metal coupling agent having an amino group and the organic solvent was obtained thereby.

Next, with the exception that the particle dispersion liquid m' was used in place of the particle dispersion liquid a', the adhesive composition (hereinafter, referred to as the adhesive composition m) was obtained in the same manner as Example 1.

With the exception that the adhesive composition m was used, the adhesive layer according to Example 13, the near-infrared absorption film having the adhesive layer according to Example 13 and the laminated body having the near-infrared absorption film according to Example 13 were obtained in the same manner as Example 1.

The evaluations were performed to the particle dispersion liquid m, the particle dispersion liquid m', the adhesive composition m, the adhesive layer thereof, the near-infrared absorption film and the laminated body in the same manner as Examples 1 to 12.

The measurement results are illustrated in Tables 1 and 3.

### [Example 14]

The dispersing liquid (hereinafter, referred to as the particle dispersion liquid n) of the fine particle j' was obtained in the same manner as Example 10 with the exception that the dispersing agent (acid value: 76 mg KOH/g) (hereinafter, referred to as the dispersing agent n) having the carboxyl group as the functional group and the polyurethane main chain was used in place of the dispersing agent having a group comprised of an amine as the functional group and a polyacrylic main chain.

The value of the peak top intensity of the X-ray diffraction pattern of the composite tungsten oxide particles comprised of the particle dispersion liquid n, that is, the composite tungsten oxide particles after the pulverization and the dispersion treatment was 4200 counts and the peak position was 2θ = 27.8°.

On the other hand, the standard silicon powder sample (640c, produced by NIST) was prepared, and the peak intensity value of the silicon powder standard sample based on the (220) plane was measured to be 19800 counts.

Therefore, when the peak intensity value of the standard sample was set to 1, it was found that the XRD peak intensity ratio value of the composite tungsten oxide particles of the particle dispersion liquid n according to Example 14 was 0.21.

Further, the crystallite size of the composite tungsten oxide particles after the pulverization and the dispersion treatment according to Example 14 was 22.1 nm.

3-(2-aminoethylamino) propyltrimethoxysilane (CAS No. 1760-24-3, hereinafter, referred to as silane coupling agent n) which is a metal coupling agent having an amino group was added and mixed in the particle dispersion liquid n in place of the 3-aminopropyltrimethoxysilane (CAS No. 13822-56-5) which is a metal coupling agent having an amino group. In this case, the silane coupling agent n was added and mixed so that the mass ratio of the silane coupling agent n relative to the composite tungsten oxide in the obtained dispersing liquid [composite tungsten oxide]/[silane coupling agent n] = 100/10. The dispersing liquid (hereinafter, referred to as the particle dispersion liquid n') composed of the composite tungsten oxide particles, the dispersing agent, the metal coupling agent having an amino group and the organic solvent was obtained thereby.

Next, with the exception that the particle dispersion liquid n' was used in place of the particle dispersion liquid a', the adhesive composition (hereinafter, referred to as the adhesive composition n) was obtained in the same manner as Example 1.

With the exception that the adhesive composition n was used, the adhesive layer according to Example 14, the near-infrared absorption film having the adhesive layer according to Example 14 and the laminated body having the near-infrared absorption film according to Example 14 were obtained in the same manner as Example 1.

The evaluations were performed to the particle dispersion liquid n, the particle dispersion liquid n', the adhesive composition n, the adhesive layer thereof, the near-infrared absorption film and the laminated body in the same manner as Examples 1 to 13.

The measurement results are illustrated in Tables 1 and 3.

### [Example 15]

The dispersing liquid (hereinafter, referred to as the particle dispersion liquid o) of the fine particle j' was obtained in the same manner as Example 10 with the exception that the dispersing agent (acid value: 29 mg KOH/g) (hereinafter, referred to as the dispersing agent o) having the carboxyl group as the functional group and a polystyrene-based main chain was used in place of the dispersing agent having a group comprised of an amine as the functional group and a polyacrylic main chain.

The value of the peak top intensity of the X-ray diffraction pattern of the composite tungsten oxide particles comprised of the particle dispersion liquid o, that is, the composite tungsten oxide particles after the pulverization and the dispersion treatment was 4200 counts and the peak position was 2θ = 27.8°.

On the other hand, the standard silicon powder sample (640c, produced by NIST) was prepared, and the peak intensity value of the silicon powder standard sample based on the (220) plane was measured to be 19800 counts.

Therefore, when the peak intensity value of the standard sample was set to 1, it was found that the XRD peak intensity ratio value of the composite tungsten oxide particles of the particle dispersion liquid o according to Example 15 was 0.21.

Further, the crystallite size of the composite tungsten oxide particles after the pulverization and the dispersion treatment according to Example 15 was 18.5 nm.

Trimethoxy [3-(phenylamino) propyl] silane (CAS No. 3068-76-6, hereinafter, referred to as silane coupling agent o) which is the metal coupling agent having an amino group was added and mixed in the particle dispersion liquid o in place of the 3-aminopropyltrimethoxysilane (CAS No. 13822-56-5) which is the metal coupling agent having an amino group. In this case, the silane coupling agent o was added and mixed so that the mass ratio of the silane coupling agent o relative to the composite tungsten oxide in the obtained dispersing liquid [composite tungsten oxide]/[silane coupling agent o] = 100/10. The dispersing liquid (hereinafter, referred to as the particle dispersion liquid o') composed of the composite tungsten oxide particles, the dispersing agent, the metal coupling agent having an amino group and the organic solvent was obtained thereby.

Next, with the exception that the particle dispersion liquid o' was used in place of the particle dispersion liquid a', the adhesive composition (hereinafter, referred to as the adhesive composition o) was obtained in the same manner as Example 1.

With the exception that the adhesive composition o was used, the adhesive layer according to Example 15, the near-infrared absorption film having the adhesive layer according to Example 15 and the laminated body having the near-infrared absorption film according to Example 15 were obtained in the same manner as Example 1.

The evaluations were performed to the particle dispersion liquid o, the particle dispersion liquid o', the adhesive composition o, the adhesive layer thereof, the near-infrared absorption film and the laminated body in the same manner as Examples 1 to 14.

The measurement results are illustrated in Tables 1 and 3.

### [Example 16]

Isopropyltri (N-aminoethyl aminoethyl) titanate (hereinafter, referred to as titanate coupling agent p) which is a metal coupling agent having an amino group was added and mixed in the particle dispersion liquid a according to Example 1 in place of the 3-aminopropyltrimethoxysilane (CAS No. 13822-56-5) which is a metal coupling agent having an amino group. In this case, the titanate coupling agent p was added and mixed so that the mass ratio of the titanate coupling agent p relative to the composite tungsten oxide in the obtained dispersing liquid [composite tungsten oxide]/[titanate coupling agent p] = 100/10. The dispersing liquid (hereinafter, referred to as the particle dispersion liquid p') composed of the composite tungsten oxide particles, the dispersing agent, the metal coupling agent having an amino group and the organic solvent was obtained thereby.

Next, with the exception that the particle dispersion liquid p' was used in place of the particle dispersion liquid a', the adhesive composition (hereinafter, referred to as the adhesive composition p) was obtained in the same manner as Example 1.

With the exception that the adhesive composition p was used, the adhesive layer according to Example 16, the near-infrared absorption film having the adhesive layer according to Example 16, and the laminated body having the near-infrared absorption film according to Example 16 were obtained in the same manner as Example 1.

The evaluations were performed to the particle dispersion liquid p', the adhesive composition p, the adhesive layer thereof, the near-infrared absorption film and the laminated body in the same manner as Examples 1 to 15.

The measurement results are illustrated in Tables 1 and 3.

### [Example 17]

The dispersing liquid (hereinafter, referred to as the particle dispersion liquid q) of the fine particle j' was obtained in the same manner as Example 10 with the exception that the dispersing agent (amine value: 32 mg KOH/g) (hereinafter, referred to as the dispersing agent q) having a group having an amine as a functional group and a polyether-based main chain was used in place of the dispersing agent having a group comprised of an amine as the functional group and a polyacrylic main chain.

The value of the peak top intensity of the X-ray diffraction pattern of the composite tungsten oxide particles comprised of the particle dispersion liquid q, that is, the composite tungsten oxide particles after the pulverization and the dispersion treatment was 4200 counts and the peak position was 2θ = 27.8°.

On the other hand, the standard silicon powder sample (640c, produced by NIST) was prepared, and the peak intensity value of the silicon powder standard sample based on the (220) plane was measured to be 19800 counts.

Therefore, when the peak intensity value of the standard sample was set to 1, it was discovered the XRD peak intensity ratio value of the composite tungsten oxide particles of that the particle dispersion liquid q according to Example 17 was 0.21.

Further, the crystallite size of the composite tungsten oxide particles after the pulverization and the dispersion treatment according to Example 17 was 23.3 nm.

Except for using the particle dispersion liquid q in place of the particle dispersion liquid a, the dispersing liquid (hereinafter, referred to as the particle dispersion liquid q') composed of the composite tungsten oxide particles, the dispersing agent, the metal coupling agent having an amino group and the organic solvent was obtained in the same manner as Example 1.

Next, with the exception that the particle dispersion liquid q' was used in place of the particle dispersion liquid a', the adhesive composition (hereinafter, referred to as the adhesive composition q) was obtained in the same manner as Example 1.

With the exception that the adhesive composition q was used, the adhesive layer according to Example 17, the near-infrared absorption film having the adhesive layer according to Example 17 and the laminated body having the near-infrared absorption film according to Example 17 were obtained in the same manner as Example 1.

The evaluations were performed to the particle dispersion liquid q, the particle dispersion liquid q', the adhesive composition q, the adhesive layer thereof, the near-infrared absorption film and the laminated body in the same manner as Examples 1 to 16.

The measurement results are illustrated in Tables 1 and 3.

### [Example 18]

The dispersing liquid (hereinafter, referred to as the particle dispersion liquid r) of the fine particle j' was obtained in the same manner as Example 10 with the exception that the dispersing agent (amine value: 42 mg KOH/g, acid value: 25 mg KOH/g) (hereinafter, referred to as the dispersing agent r) having a group including a carboxyl group as a functional group and an aliphatic-based main chain was used in place of the dispersing agent having a group comprised of an amine as the functional group and a polyacrylic main chain.

The value of the peak top intensity of the X-ray diffraction pattern of the composite tungsten oxide particles comprised of the particle dispersion liquid r, that is, the composite tungsten oxide particles after the pulverization and the dispersion treatment was 4200 counts and the peak position was 2θ = 27.8°.

On the other hand, the standard silicon powder sample (640c, produced by NIST) was prepared, and the peak intensity value of the silicon powder standard sample based on the (220) plane was measured to be 19800 counts.

Therefore, when the peak intensity value of the standard sample was set to 1, it was found that the XRD peak intensity ratio value of the composite tungsten oxide particles of the particle dispersion liquid r according to Example 18 was 0.21.

Further, the crystallite size of the composite tungsten oxide particles after the pulverization and the dispersion treatment according to Example 18 was 26.1 nm.

Except for using the particle dispersion liquid r in place of the particle dispersion liquid a, the dispersing liquid (hereinafter, referred to as the particle dispersion liquid r') composed of the composite tungsten oxide particles, the dispersing agent, the metal coupling agent having an amino group and the organic solvent was obtained in the same manner as Example 1.

Next, with the exception that the particle dispersion liquid r' was used in place of the particle dispersion liquid a', the adhesive composition (hereinafter, referred to as the adhesive composition r) was obtained in the same manner as Example 1.

With the exception that the adhesive composition r was used, the adhesive layer according to Example 18, the near-infrared absorption film having the adhesive layer according to Example 18 and the laminated body having the near-infrared absorption film according to Example 18 were obtained in the same manner as Example 1.

The evaluations were performed to the particle dispersion liquid r, the particle dispersion liquid r', the adhesive composition r, the adhesive layer thereof, the near-infrared absorption film and the laminated body in the same manner as Examples 1 to 17.

The measurement results are illustrated in Tables 1 and 3.

### [Example 19]

The dispersing liquid (hereinafter, referred to as the particle dispersion liquid s) of the fine particle j' was obtained in the same manner as Example 10 with the exception that the dispersing agent (amine value: 94 mg KOH/g, acid value: 94 mg KOH/g) (hereinafter, referred to as the dispersing agent s) having a phosphate group and a group including amine as functional groups and a main chain of a copolymer of polyether-based and polyester-based units was used in place of the dispersing agent having a group comprised of an amine as the functional group and a polyacrylic main chain.

The value of the peak top intensity of the X-ray diffraction pattern of the composite tungsten oxide particles comprised of the particle dispersion liquid s, that is, the composite tungsten oxide particles after the pulverization and the dispersion treatment was 4200 counts and the peak position was 2θ = 27.8°.

On the other hand, the standard silicon powder sample (640c, produced by NIST) was prepared, and the peak intensity value based on (220) plane of the silicon powder standard sample was measured, and it was found to be 19800 counts.

Therefore, it was found that the XRD peak intensity ratio value of the composite tungsten oxide particles in the particle dispersion liquid s according to Example 19 was 0.21, based on the peak intensity value of 1 of the standard sample.

Further, the crystallite size of the composite tungsten oxide particles after the pulverization and the dispersion treatment according to Example 19 was 24.9 nm.

Except for using the particle dispersion liquid s in place of the particle dispersion liquid a, the dispersing liquid (hereinafter, referred to as the particle dispersion liquid s') composed of the composite tungsten oxide particles, the dispersing agent, the metal coupling agent having an amino group and the organic solvent was obtained in the same manner as Example 1.

Next, with the exception that the particle dispersion liquid s' was used in place of the particle dispersion liquid a', the adhesive composition (hereinafter, referred to as the adhesive composition s) was obtained in the same manner as Example 1.

With the exception that the adhesive composition s was used, the adhesive layer according to Example 19, the near-infrared absorption film having the adhesive layer according to Example 19 and the laminated body having the near-infrared absorption film according to Example 19 were obtained in the same manner as Example 1.

The evaluations were performed to the particle dispersion liquid s, the particle dispersion liquid s', the adhesive composition s, the adhesive layer thereof, the near-infrared absorption film and the laminated body in the same manner as Examples 1 to 18.

The measurement results are illustrated in Tables 1 and 3.

### [Example 20]

The dispersing liquid (hereinafter, referred to as the particle dispersion liquid t) of the fine particle j' was obtained in the same manner as Example 10 with the exception that the dispersing agent (amine value: 48 mg KOH/g) (hereinafter, referred to as the dispersing agent t) having a group comprised of an amine as the functional group and a polyurethane main chain was used in place of the dispersing agent having a group comprised of an amine as the functional group and the polyacrylic main chain.

The value of the peak top intensity of the X-ray diffraction pattern of the composite tungsten oxide particles comprised of the particle dispersion liquid t, that is, the composite tungsten oxide particles after the pulverization and the dispersion treatment was 4200 counts and the peak position was 2θ = 27.8°.

On the other hand, the standard silicon powder sample (640c, produced by NIST) was prepared, and the peak intensity value of the silicon powder standard sample based on the (220) plane was measured to be 19800 counts.

Therefore, when the peak intensity value of the standard sample was set to 1, it was found that the XRD peak intensity ratio value of the composite tungsten oxide particles of the particle dispersion liquid t according to Example 20 was 0.21.

Further, the crystallite size of the composite tungsten oxide particles after the pulverization and the dispersion treatment according to Example 20 was 23.7 nm.

Except for using the particle dispersion liquid t in place of the particle dispersion liquid a, the dispersing liquid (hereinafter, referred to as the particle dispersion liquid t') composed of the composite tungsten oxide particles, the dispersing agent, the metal coupling agent having an amino group and organic solvent was obtained in the same manner as Example 1.

Next, with the exception that the particle dispersion liquid t' was used in place of the particle dispersion liquid a', the adhesive composition (hereinafter, referred to as the adhesive composition t) was obtained in the same manner as Example 1.

With the exception that the adhesive composition t was used, the adhesive layer according to Example 20, the near-infrared absorption film having the adhesive layer according to Example 20 and the laminated body having the near-infrared absorption film according to Example 20 were obtained in the same manner as Example 1.

The evaluations were performed to the particle dispersion liquid t, the particle dispersion liquid t', the adhesive composition t, the adhesive layer thereof, the near-infrared absorption film and the laminated body in the same manner as Examples 1 to 19.

The measurement results are illustrated in Tables 1 and 3.

### [Example 21]

20 parts by mass of fine particle j, 7 parts by mass of the dispersing agent a, 73 parts by mass of toluene which is an organic solvent, 1 part by mass of benzotriazole-based ultraviolet absorbing agent including a benzotriazole compound (produced by BASF, TINUVIN384-2), 1 part by mass of an aminoether-based HALS including a reaction product of decanedioicacid bis(2,2,6,6-tetramethyl-1-(octyloxy)-4-piperidinyl)ester, 1,1-dimethylethylhydroperoxide and octane (produced by BASF, TINUVIN123), and 1 part by mass of a hindered phenol-based antioxidant including isooctyl-3-(3,5-di-t-butyl-4-hydroxyphenyl) propionate (produced by BASF, product name IRGANOX1135) as an antioxidant were weighed. These raw materials were introduced into a paint shaker in which 0.3 mmϕ ZrO₂ beads were introduced, and the pulverization and the dispersion treatment were performed for 1 hour to obtain the particle dispersion liquid (hereinafter, referred to as the particle dispersion liquid u) of the fine particle j.

The weather resistance of the adhesive layer improved by adding the ultraviolet absorbing agent, HALS, and the antioxidant.

The value of the peak top intensity of the X-ray diffraction pattern of the composite tungsten oxide particles comprised of the particle dispersion liquid u, that is, the composite tungsten oxide particles after the pulverization and the dispersion treatment was 4200 counts and the peak position was 2θ = 27.8°.

On the other hand, the standard silicon powder sample (640c, produced by NIST) was prepared, and the peak intensity value of the silicon powder standard sample based on the (220) plane was measured to be 19800 counts.

Therefore, when the peak intensity value of the standard sample was set to 1, it was found that the XRD peak intensity ratio value of the composite tungsten oxide particles of the particle dispersion liquid u according to Example 21 was 0.21.

Further, the crystallite size of the composite tungsten oxide particles after the pulverization and the dispersion treatment according to Example 21 was 26.5 nm.

Except for using the particle dispersion liquid u in place of the particle dispersion liquid a, the dispersing liquid (hereinafter, referred to as the particle dispersion liquid u') composed of the composite tungsten oxide particles, the dispersing agent, the metal coupling agent having an amino group, the organic solvent, the ultraviolet absorbing agent, HALS and the antioxidant was obtained in the same manner as Example 1.

Next, with the exception that the particle dispersion liquid u' was used in place of the particle dispersion liquid a', the adhesive composition (hereinafter, referred to as the adhesive composition u) was obtained in the same manner as Example 1.

With the exception that the adhesive composition u was used, the adhesive layer according to Example 21, the near-infrared absorption film having the adhesive layer according to Example 21 and the laminated body having the near-infrared absorption film according to Example 21 were obtained in the same manner as Example 1.

The evaluations were performed to the particle dispersion liquid u, the particle dispersion liquid u', the adhesive composition u, the adhesive layer thereof, the near-infrared absorption film and the laminated body in the same manner as Examples 1 to 20

The measurement results are illustrated in Tables 1 and 3.

### [Comparative example 1]

Except for changing the carrier gas flow amount, the plasma gas flow amount, the sheath gas flow amount, and the raw material feed rate, the composite tungsten oxide particles (hereinafter, referred to as fine particle v) according to Comparative example 1 were produced by the same operations as Example 1.

Further, with the exception that fine particle v was used in place of the fine particle a, the dispersing liquid (hereinafter, referred to as the particle dispersion liquid v) of the fine particle v was obtained in the same manner as Example 1.

The value of the peak top intensity of the X-ray diffraction pattern of the composite tungsten oxide particles comprised of the particle dispersion liquid v, that is, the composite tungsten oxide particles after the pulverization and the dispersion treatment was 1000 counts and the peak position was 2θ = 27.8°.

On the other hand, the standard silicon powder sample (640c, produced by NIST) was prepared, and the peak intensity value of the silicon powder standard sample based on the (220) plane was measured to be 19800 counts.

Therefore, when the peak intensity value of the standard sample was set to 1, it was found that the XRD peak intensity ratio value of the composite tungsten oxide particles of the particle dispersion liquid v according to Comparative example 1 was 0.05.

Further, the crystallite size of the composite tungsten oxide particles after the pulverization and the dispersion treatment according to Comparative example 1 was 8.0 nm.

With the exception that the particle dispersion liquid v was used in place of the particle dispersion liquid a, the dispersing liquid (hereinafter, referred to as the particle dispersion liquid v') composed of the composite tungsten oxide particles, the dispersing agent, the metal coupling agent having an amino group and the organic solvent was obtained in the same manner as Example 1.

Next, with the exception that the particle dispersion liquid v' was used in place of the particle dispersion liquid a', the adhesive composition (hereinafter, referred to as the adhesive composition v) was obtained in the same manner as Example 1.

With the exception that the adhesive composition v was used, the adhesive layer according to Comparative example 1, the near-infrared absorption film having the adhesive layer according to Comparative example 1, and the laminated body having the near-infrared absorption film according to Comparative example 1 were obtained in the same manner as Example 1.

Except for using the fine particle v in place of the fine particle a, the fine particle v was evaluated in the same manner as Example 1. Further, the evaluations were performed to the particle dispersion liquid v, the particle dispersion liquid v', the adhesive composition v, the adhesive layer thereof, the near-infrared absorption film and the laminated body in the same manner as Examples 1 to 21.

The measurement results are illustrated in Tables 2 and 4.

### [Comparative example 2]

Except for changing the carrier gas flow amount, the plasma gas flow amount, the sheath gas flow amount, the raw material feed rate, the composite tungsten oxide particles (hereinafter, referred to as fine particle w) according to Comparative example 2 were produced by the same operations as Example 1.

Further, with the exception that the fine particle w was used in place of the fine particle a, the dispersing liquid (hereinafter, referred to as the particle dispersion liquid w) of the fine particle w was obtained in the same manner as Example 1.

The value of the peak top intensity of the X-ray diffraction pattern of the composite tungsten oxide particles comprised of the particle dispersion liquid w, that is, the composite tungsten oxide particles after the pulverization and the dispersion treatment was 1100 counts and the peak position was 2θ = 27.8°.

On the other hand, the standard silicon powder sample (640c, produced by NIST) was prepared, and the peak intensity value of the silicon powder standard sample based on the (220) plane was measured to be 19800 counts.

Therefore, when the peak intensity value of the standard sample was set to 1, it was found that the XRD peak intensity ratio value of the composite tungsten oxide particles of the particle dispersion liquid w according to Comparative example 2 was 0.06.

Further, the crystallite size of the composite tungsten oxide particles after the pulverization and the dispersion treatment according to Comparative example 2 was 9.2 nm.

With the exception that the particle dispersion liquid w was used in place of the particle dispersion liquid a, the dispersing liquid (hereinafter, referred to as the particle dispersion liquid w') composed of the composite tungsten oxide particles, the dispersing agent, the metal coupling agent having an amino group and the organic solvent was obtained in the same manner as Example 1.

Next, with the exception that the particle dispersion liquid w' was used in place of the particle dispersion liquid a', the adhesive composition (hereinafter, referred to as the adhesive composition w) was obtained in the same manner as Example 1.

With the exception that the adhesive composition w was used, the adhesive layer according to Comparative example 2, the near-infrared absorption film having the adhesive layer according to Comparative example 2 and the laminated body having the near-infrared absorption film according to Comparative example 2 were obtained in the same manner as Example 1.

Except for using the fine particle w in place of the fine particle a, the fine particle w was evaluated in the same manner as Example 1. Further, the evaluations were performed to the particle dispersion liquid w, the particle dispersion liquid w', the adhesive composition w, the adhesive layer thereof, the near-infrared absorption film and the laminated body in the same manner as Examples 1 to 21.

The measurement results are illustrated in Tables 2 and 4.

### [Comparative example 3]

Except for setting the high frequency power to 15 KW in order to generate a thermal plasma having a high temperature part of 5000 to 10000 K, the composite tungsten oxide particles (hereinafter, referred to as fine particle x) according to Comparative example 3 were produced by the same operations as Example 1.

Further, with the exception that the fine particle x was used in place of the fine particle a, the dispersing liquid (hereinafter, referred to as the particle dispersion liquid x) of the fine particle x was obtained in the same manner as Example 1.

The value of the peak top intensity of the X-ray diffraction pattern of composite tungsten oxide particles comprised of the particle dispersion liquid x, that is, the composite tungsten oxide particles after the pulverization and the dispersion treatment was 2400 counts and the peak position was 2θ = 27.8°.

On the other hand, the standard silicon powder sample (640c, produced by NIST) was prepared, and the peak intensity value of the silicon powder standard sample based on the (220) plane was measured to be 19800 counts.

Therefore, when the peak intensity value of the standard sample was set to 1, it was found that the XRD peak intensity ratio value of the composite tungsten oxide particles of the particle dispersion liquid x according to Comparative example 3 was 0.12.

Further, the crystallite size of the composite tungsten oxide particles after the pulverization and the dispersion treatment according to Comparative example 3 was 22.9 nm.

With the exception that the particle dispersion liquid x was used in place of the particle dispersion liquid a, the dispersing liquid (hereinafter, referred to as the particle dispersion liquid x') composed of the composite tungsten oxide particles, the dispersing agent, the metal coupling agent having an amino group and the organic solvent was obtained in the same manner as Example 1.

Next, with the exception that the particle dispersion liquid x' was used in place of the particle dispersion liquid a', the adhesive composition (hereinafter, referred to as the adhesive composition x) was obtained in the same manner as Example 1.

With the exception that the adhesive composition x was used, the adhesive layer according to Comparative example 3, the near-infrared absorption film having the adhesive layer according to Comparative example 3 and the laminated body having the near-infrared absorption film according to Comparative example 3 were obtained in the same manner as Example 1.

Except for using the fine particle x in place of the fine particle a, the fine particle x was evaluated in the same manner as Example 1. Further, the evaluations were performed to the particle dispersion liquid x, the particle dispersion liquid x', the adhesive composition x, the adhesive layer thereof, the near-infrared absorption film and the laminated body in the same manner as Examples 1 to 21.

The measurement results are illustrated in Tables 2 and 4.

### [Comparative example 4]

20 parts by mass of fine particle j' was mixed with 80 parts by mass of water, and approximately 3 kg of a slurry was prepared. However, a dispersing agent was not added to the slurry. The slurry was charged into the medium stirring mill together with beads, and the pulverization and the dispersion treatment were performed for forty hours to obtain the composite tungsten oxide particle dispersing liquid of Comparative example 4. The dispersion particle size of the composite tungsten oxide particle dispersing liquid according to Comparative example 4 was measured to be 120 nm. After the water of the composite tungsten oxide particle dispersing liquid according to Comparative example 4 was removed by the same conditions as Example 10, the composite tungsten oxide particles y according to Comparative example 4 were obtained by pulverizing.

The X-ray diffraction pattern of the composite tungsten oxide particles y was measured, and the phase identification was performed, and as a result, the obtained ultrafine particles were identified as having a hexagonal Cs_{0.33}WO₃ single phase. Further, the value of the peak top intensity of the X-ray diffraction pattern of the obtained particles was 1300 counts and the peak position was 2θ = 27.8°, and the crystallite size was 8.1 nm. On the other hand, the standard silicon powder sample (640c, produced by NIST) was prepared, and the peak intensity value of the silicon powder standard sample based on the (220) plane was measured to be 19800 counts. Therefore, when the peak intensity value of the standard sample was set to 1, it was found that the XRD peak intensity ratio value of the composite tungsten oxide particles y according to Comparative example 4 after the pulverization and the dispersion treatment was 0.07.

The BET specific surface area of the composite tungsten oxide particles y was measured to be 102.8 m²/g.

20 parts by mass of the composite tungsten oxide ultrafine particle y, 7 parts by mass of the dispersing agent (amine value: 13 mg KOH/g) (hereinafter, referred to as the dispersing agent y) having a group comprised of an amine as the functional group and a polyacrylic main chain and 73 parts by mass of toluene which is an organic solvent were weighed. These raw materials were introduced in a paint shaker in which 0.3 mmcp ZrO₂ beads were also introduced, and the dispersion treatment was performed for 5 minutes to obtain the particle dispersion liquid (hereinafter, referred to as the particle dispersion liquid y) of the fine particle y.

With the exception that the particle dispersion liquid y was used in place of the particle dispersion liquid a, the dispersing liquid (hereinafter, referred to as the particle dispersion liquid y') composed of the composite tungsten oxide particles, the dispersing agent, the metal coupling agent having an amino group and the organic solvent was obtained in the same manner as Example 1.

The value of the peak top intensity of the X-ray diffraction pattern of composite tungsten oxide particles comprised of the particle dispersion liquid y, that is, the composite tungsten oxide particles after the pulverization and the dispersion treatment was 1300 counts and the peak position was 2θ = 27.8°.

On the other hand, the standard silicon powder sample (640c, produced by NIST) was prepared, and the peak intensity value of the silicon powder standard sample based on the (220) plane was measured to be 19800 counts.

Therefore, when the peak intensity value of the standard sample was set to 1, it was found that the XRD peak intensity ratio value of the composite tungsten oxide particles of the particle dispersion liquid y according to Comparative example 4 was 0.07.

Further, the crystallite size of the composite tungsten oxide particles after the pulverization and the dispersion treatment according to Comparative example 4 was 8.1 nm.

Next, with the exception that the particle dispersion liquid y' was used in place of the particle dispersion liquid a', the adhesive composition (hereinafter, referred to as the adhesive composition y) was obtained in the same manner as Example 1.

With the exception that the adhesive composition y was used, the adhesive layer according to Comparative example 4, the near-infrared absorption film having the adhesive layer according to Comparative example 4 and the laminated body having the near-infrared absorption film according to Comparative example 4 were obtained in the same manner as Example 1.

Except for using the fine particle y in place of the fine particle a, the fine particle y was evaluated in the same manner as Example 1. Further, the evaluations were performed to the particle dispersion liquid y, the particle dispersion liquid y', the adhesive composition y, the adhesive layer thereof, the near-infrared absorption film and the laminated body in the same manner as Examples 1 to 21.

The measurement results are illustrated in Tables 2 and 4.

According to the results of the examples and comparative examples illustrated above, it was confirmed that for the laminated body having the adhesive layers according to Examples 1 to 21, the haze was low, the change of the total light transmittance before and after the wet heat test was small and the weather resistance was excellent, and in addition, the stability of the adhesive composition was also good. It was also confirmed that visible light transmittance was 65% or more, solar transmittance was 60% or less, sufficient near-infrared absorption properties were exhibited, and high transparency was maintained even when the transmission of light in the near-infrared region was sufficiently suppressed.

From the above-described results, it was confirmed in Example 1 to 21 that the adhesive layer having a light absorbing capability in the near-infrared region, a low haze, and an excellent productivity could be provided.

In contrast, the laminated body having the adhesive layer according to Comparative examples 1 to 3 has a visible light transmittance of 65% or more, and a solar transmittance of 65% or less, and thus, do not have sufficient near-infrared absorption properties.

Further, the laminated body having the adhesive layer according to Comparative example 4 has a high haze, and is not suitable as a near-infrared absorption film used by applying to a window material.

The adhesive layer, the near-infrared absorption film, the laminated structure, the laminated body, and the adhesive composition were described above in the embodiments, the examples and the like, but the present invention is not limited to the embodiments and the examples. Various modifications and changes are possible within the scope of the gist of the present invention described in the claims.

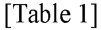

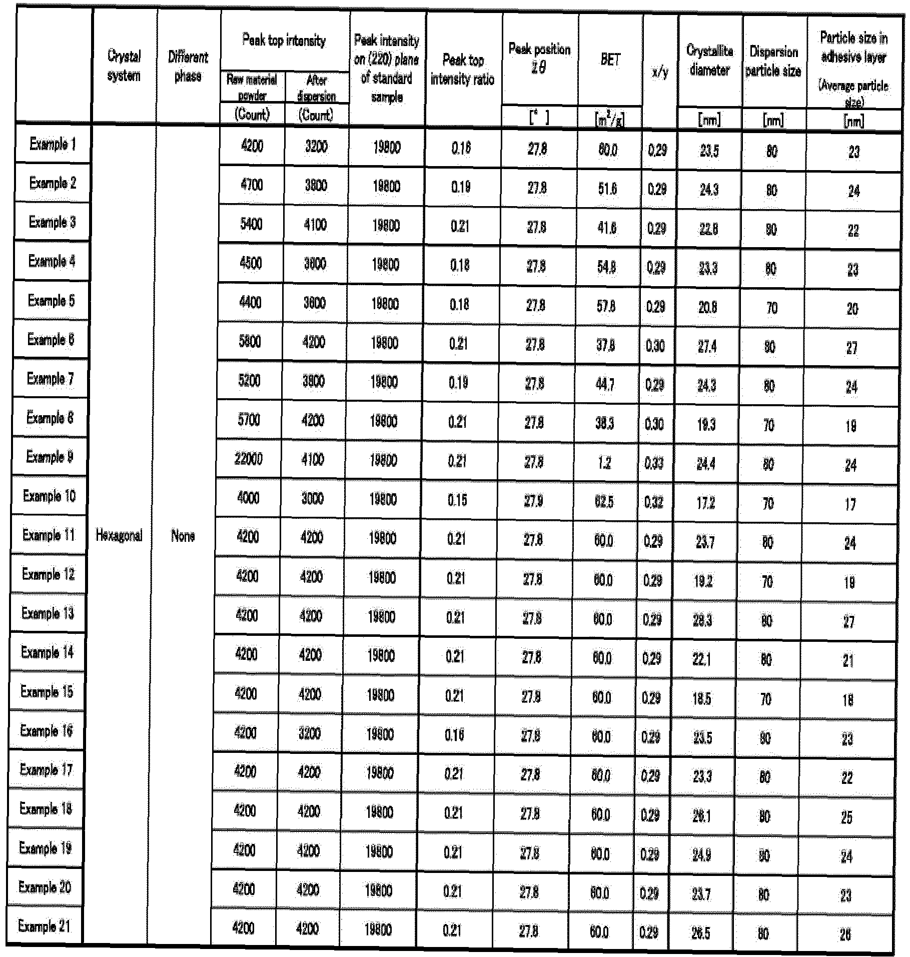

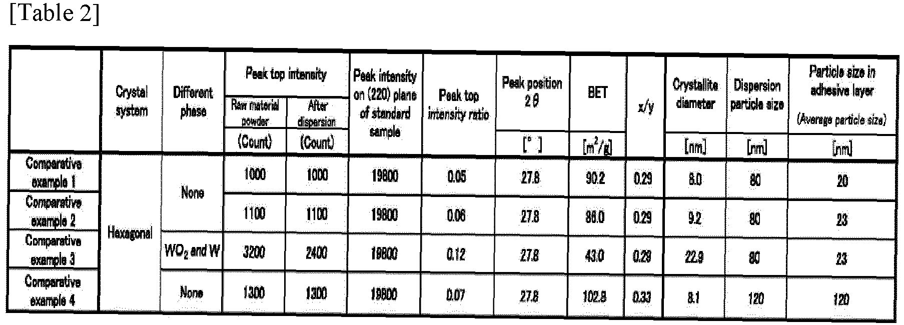

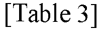

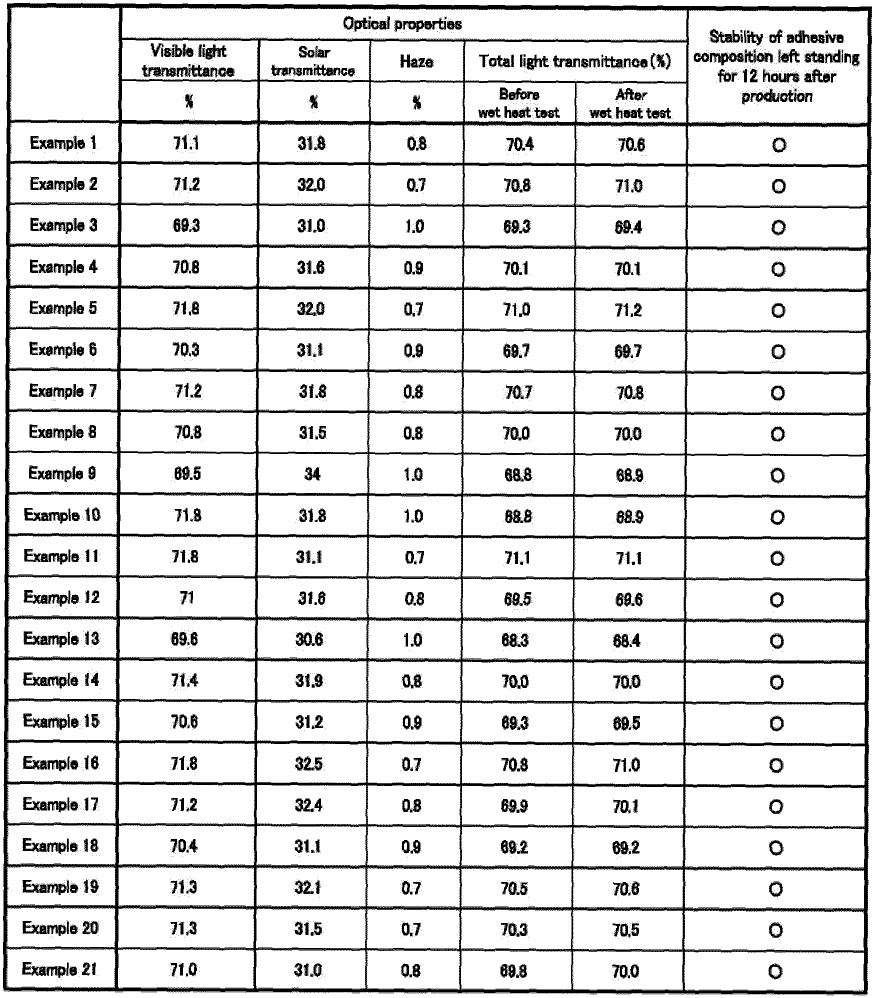

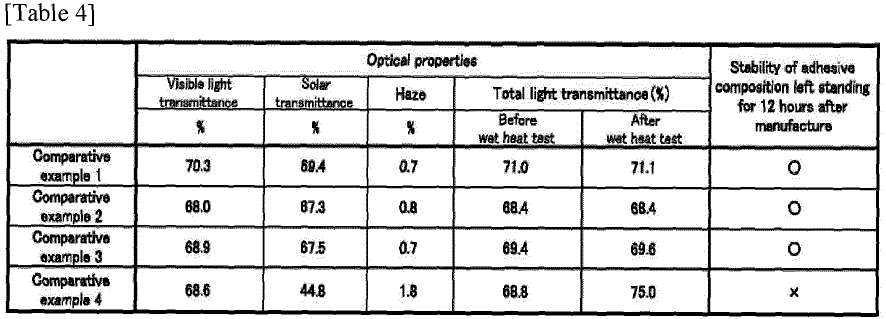

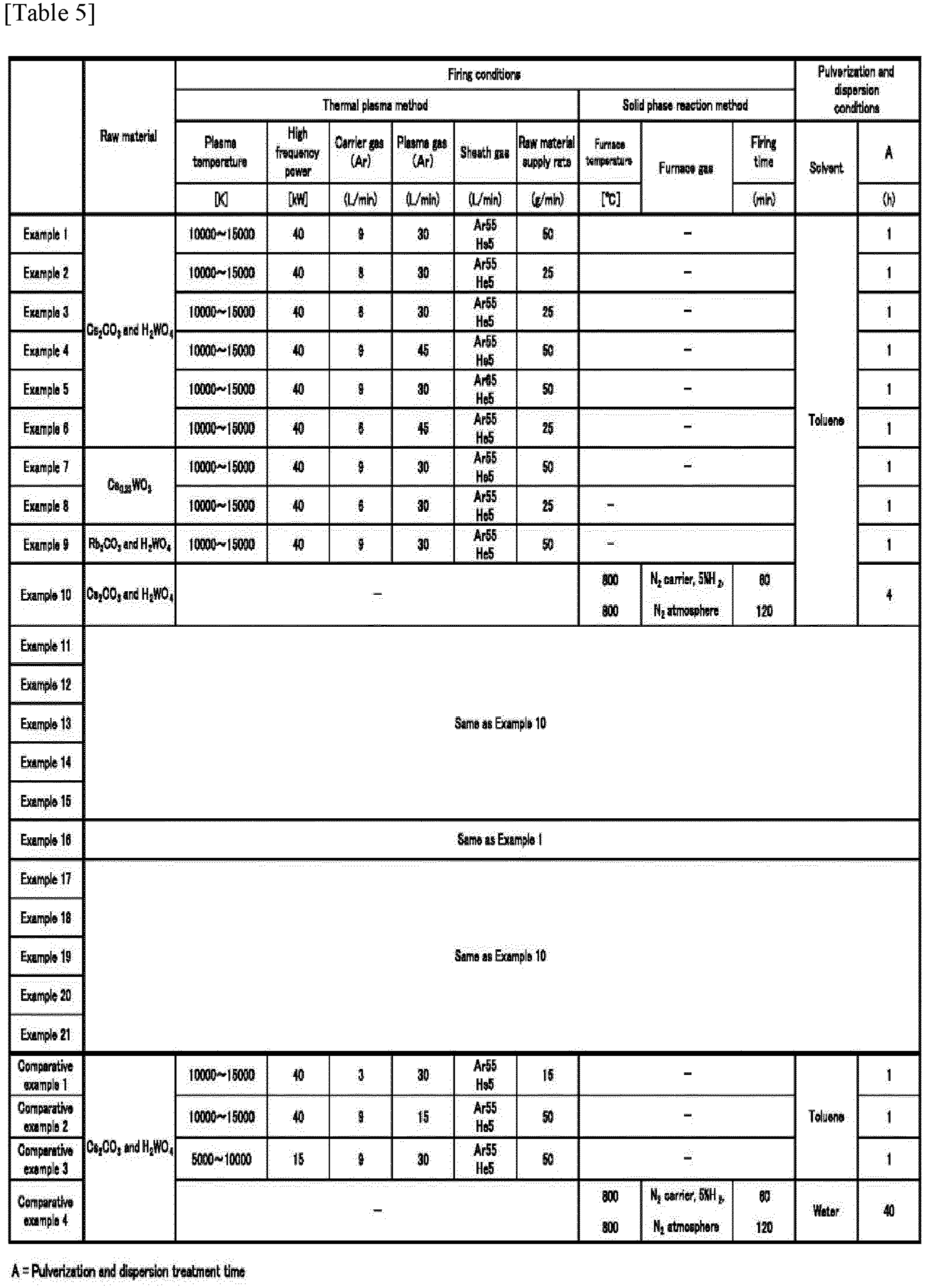

### Reference Signs List

1 thermal plasma
2 high frequency coil
3 sheath gas feed nozzle
4 plasma gas feed nozzle
5 raw material powder feed nozzle
6 reaction vessel
7 suction tube
8 filter
21 transparent film
22 transparent film
23 transparent film
31 adhesive layer
32 glass plate
331 transparent film
332 hard coat layer

## Claims

1. An adhesive layer comprising:
composite tungsten oxide particles;
a dispersing agent;
a metal coupling agent having an amino group;
an adhesive; and
a cross-linking agent,
wherein the composite tungsten oxide particles have a XRD peak top intensity ratio value of 0.13 or more based on XRD peak intensity ratio value of 1 on (220) plane of a silicon powder standard sample (640c produced by NIST).

2. The adhesive layer according to claim 1, wherein the composite tungsten oxide particles are particles of a composite tungsten oxide represented by a general formula MxWyOz (wherein, M is one or more elements selected from Cs, Rb, K, Tl, In, Ba, Li, Ca, Sr, Fe, Sn, Al, Cu and Na, and satisfying 0.001 ≤ x/y ≤ 1, and 2.2 ≤ z/y ≤ 3.0).

3. The adhesive layer according to claim 1 or 2, wherein the composite tungsten oxide particles include a composite tungsten oxide having a hexagonal crystal structure.

4. The adhesive layer according to any one of claims 1 to 3, wherein a crystallite size of the composite tungsten oxide ultrafine particles is 1 nm or more.

5. The adhesive layer according to any one of claims 1 to 4, wherein an average particle size of the composite tungsten oxide particles is 1 nm or more and 100 nm or less.

6. The adhesive layer according to any one of claims 1 to 5, wherein the metal coupling agent having an amino group is a silane coupling agent having an amino group.

7. The adhesive layer according to any one of claims 1 to 6, wherein the metal coupling agent having an amino group is a titanate coupling agent having an amino group.

8. The adhesive layer according to any one of claims 1 to 7, containing the metal coupling agent having an amino group in a proportion of 1 part by mass or more and 100 parts by mass or less, based on 100 parts by mass of the composite tungsten oxide particles.

9. The adhesive layer according to any one of claims 1 to 8, wherein the adhesive contains an acrylic polymer.

10. The adhesive layer according to any one of claims 1 to 9, wherein the dispersing agent is a high molecular dispersing agent.

11. The adhesive layer according to any one of claims 1 to 10 further containing one or more selected from an ultraviolet absorbing agent, a HALS, and an antioxidant.

12. A near-infrared absorption film comprising the adhesive layer according to any one of claims 1 to 11.

13. The near-infrared absorption film comprising
a transparent film having one surface and the other surface arranged on an opposite side of the one surface;
the adhesive layer according to any one of claims 1 to 11 arranged on the one surface side of the transparent film, and
a hard coat layer arranged on the other surface side of the transparent film.

14. A laminated structure having
a plurality of transparent films and
the adhesive layer according to any one of claims 1 to 11,
wherein a plurality of the transparent films and the adhesive layer are arranged to be parallel to each other, and
the adhesive layer is arranged between a plurality of the transparent films.

15. A laminated body comprising
the adhesive layer according to any one of claims 1 to 11,
a glass plate arranged on one surface side of the adhesive layer, and
a transparent film having a hard coat layer arranged on an opposite side of the one surface of the adhesive layer.

16. An adhesive composition comprising:
composite tungsten oxide particles;
a dispersing agent;
a metal coupling agent having an amino group;
an adhesive; and
a cross-linking agent,
wherein the composite tungsten oxide particles have a XRD peak top intensity ratio value of 0.13 or more based on XRD peak intensity ratio value of 1 on (220) plane of a silicon powder standard sample (640c produced by NIST).

17. The adhesive composition according to claim 16 further containing one or more selected from an ultraviolet absorbing agent, a HALS, and an antioxidant.

18. A method for producing an adhesive composition comprising: composite tungsten oxide particles; a dispersing agent; a metal coupling agent having an amino group; an adhesive; a cross-linking agent ; and a solvent,
the method comprising:
producing by firing the composite tungsten oxide particles so that a XRD peak top intensity ratio value is 0.13 or more based on XRD peak intensity ratio value of 1 on (220) plane of a silicon powder standard sample (640c produced by NIST);
adding the produced composite tungsten oxide particles, the dispersing agent, the metal coupling agent having an amino group, the adhesive and the cross-linking agent, to the solvent, and
dispersing the composite tungsten oxide particles into the solvent, while maintaining the XRD peak top intensity ratio value to 0.13 or more.
